# EUROPEAN PATENT SPECIFICATION

(11) **EP 1 634 711 B1**
(45) Date of publication and mention of the grant of the patent: **05.08.2009**
(21) Application number: 05019884.5
(22) Date of filing: 13.09.2005
(51) Int. Cl.: B41J 2/47

(54) **Image forming apparatus for correcting magnification of image**
Bildaufnahmevorrichtung zum Korrigieren einer Bildvergrösserung
Dispositif de formation d'image pour corriger l'agrandissement

(30) Priority: 13.09.2004 JP 2004265698; 16.09.2004 JP 2004270049
(43) Date of publication of application: 15.03.2006
(73) Proprietor: Ricoh Company, Ltd., Tokyo 143-8555 (JP)
(72) Inventor: Ohkawara, Hisakazu, Ohta-ku Tokyo 143-8555 (JP); Akamatsu, Hidenori, Ohta-ku Tokyo 143-8555 (JP)
(74) Representative: Schwabe - Sandmair - Marx

(56) References cited:
- US-A- 6 157 400
- US-A1- 2003 067 533
- US-B1- 6 219 085
- US-B1- 6 236 418
- US-B1- 6 459 520
- JOHN C. MALLINSON: "Frequency Modulation in Video Tape Recorders" IEEE TRANSACTIONS ON MAGNETICS, vol. 34, no. 6, November 1998 (1998-11), pages 3916-3921, XP011032099

## Description

### BACKGROUND OF THE INVENTION

### 1. Field of the Invention

The present invention relates to an image forming apparatus.

### 2. Description of the Related Art

In laser printers, which are image forming apparatuses, a photoconductor, which is an image carrier, is scanned in a horizontal scanning direction (i.e., main scanning direction) by optical beams (laser beams) deflected by a deflector to write an image on the surface of the photoconductor. The deflector can be, for example, a rotating polygon mirror.

Optical beams are deflected at an isometric velocity in the horizontal scanning direction by the deflector, and the optical beams are corrected from deflection at the isometric velocity to deflection at a uniform velocity by a fθ lens.

The fθ lenses can be made from different material including plastic. However, if an fθ lens made of plastic is used, its shape and/or refractive index can change with the surrounding temperature. If the shape or the refractive index changes, a scanning position on the photoconductor deviates, which results in a magnification error in the horizontal scanning direction. The magnification error leads to a degraded image. The refractive index also changes with the wavelength of the laser beam.

Various technologies have been proposed to correct the magnification error. In one approach, laser beams scanned in the horizontal scanning direction are respectively detected by laser beam detectors provided at two positions in the horizontal scanning direction, the time difference between detections of the laser beams in the two detectors is measured, and the magnification in the horizontal scanning direction is corrected based on this time difference.

Laser printers are disclosed in Japanese Patent Application Laid-open No. 2003-279873. In one of these laser printers, a scanning target surface is scanned in the horizontal scanning direction by beams of light deflected by a deflector, the beams of light are respectively detected on a write start position side and a write end position side, to correct the phase data based on the fluctuation amount of time required for scanning between the two positions, and the phase of respective signals of an image clock that performs image formation based on the phase data is shifted (phase modulation), thereby correcting the magnification of the image in the horizontal scanning direction on the image carrier.

In other laser printer disclosed in Japanese Patent Application Laid-open No. 2003-279873, the whole misregistration of dots in the horizontal scanning direction is shifted by changing the frequency of the image clock (frequency modulation), to correct the magnification of the image in the horizontal scanning direction on the image carrier.

The laser printer that corrects the magnification of the image by phase modulation in which the phase of the image clock signal is shifted can change the correction amount in a short period of time, and hence, correction can be performed in between sheets of paper (at the timing when image formation is not performed), when images are continuously formed. However, since image degradation occurs more or less as compared with the magnification correction of the image by frequency modulation, there is a problem in that when the phase shift amount of the image clock signal increases, degradation in the formed image increases.

On the other hand, when magnification correction of the image is performed by frequency modulation in which the whole misregistration amount of dots is shifted, a better image can be obtained as compared to the one obtained by phase modulation. In the case of frequency modulation, however, a phase-locked loop (PLL) circuit is normally used for generating a pixel clock for modulating the laser beams corresponding to an image signal. The PLL circuit includes a voltage-controlled oscillator that changes the frequency according to the applied voltage, and it is necessary to stop the printing operation until the PLL oscillating frequency is stabilized after having started a change in the oscillating frequency of the PLL.

That is, in the case of a method of correcting the frequency of the image signal, for example, number of prints and time are counted, and magnification correction of the image by frequency modulation is performed at an interval of certain time that is considered not to cause a side effect such as image degradation. In this case, however, image forming operation is suspended in order to correct the frequency of the image signal. As a result, the number of suspensions increases, and the overall print speed (number of image formations per unit time) as an image forming apparatus decreases drastically.

Further, when magnification correction of an image is performed by frequency modulation, if the timing for performing the frequency correction is previously set, then even when the magnification error in the horizontal scanning direction increases in the period after frequency correction of the image signal until the next frequency correction is performed, frequency correction is not performed until the timing for the next frequency correction, and hence, a degraded image is formed during this time.
US-2003/0067533 A1discloses a pixel clock generating apparatus. The pixel clock generating apparatus comprises a data offset circuit and a pixel generator. The data offset circuit defines multiple data blocks, each data block consisting of a predetermined number of successive clocks, and produces phase data for each data block. The phase data represents an amount and a direction of phase shift to be carried out for a certain clock in each data block. The pixel generator receives the phase data from the data offset circuit and generates a phase-shifted pixel clock a predetermined number of times in each data block based on the phase data.

### SUMMARY OF THE INVENTION

The invention is defined by the subject-matter of independent claim 1. The dependent claims are directed to advantageous embodiments.

### ADVANTAGES OF THE INVENTION

Advantageously, an image forming apparatus includes a deflector configured to deflect optical beams modulated according to an image signal to thereby scan a surface of an image carrier in a horizontal scanning direction to form an image on the image carrier; an optical beam detector arranged on either side of the image carrier along the horizontal scanning direction, wherein the optical beam detectors are configured to detect an optical beams deflected by the deflector; a time difference measuring unit configured to measure a time difference between detections of the optical beams by optical beam detectors; and a magnification correcting unit configured to correct, based on the time difference, a magnification in the horizontal scanning direction of the image on the image carrier. The magnification correcting unit includes a frequency modulator configured to perform magnification correction of the image by changing a frequency of the image signal in units of a line or lines; a phase modulator configured to perform magnification correction of the image by fixing the frequency and changing a cycle time of an optional pixel in units of pixel; and a phase adjustment amount-determining unit that determines whether a phase adjustment amount calculated by the phase modulator exceeds a threshold. The phase modulator performs the magnification correction of the image until the phase adjustment amount-determining unit determines that the phase adjustment amount exceeds the threshold, and the frequency modulator performs the magnification correction after it is determined that the phase adjustment amount exceeds the threshold.

Advantageously, an image forming apparatus includes a deflector configured to deflect optical beams modulated according to an image signal to thereby scan a surface of an image carrier in a horizontal scanning direction to form an image on the image carrier; an optical beam detector arranged on either side of the image carrier along the horizontal scanning direction, wherein the optical beam detectors are configured to detect an optical beams deflected by the deflector; a time difference measuring unit configured to measure a time difference between detections of the optical beams by optical beam detectors; and a magnification correcting unit configured to correct, based on the time difference, a magnification in the horizontal scanning direction of the image. The magnification correcting unit includes a frequency modulator configured to perform magnification correction of the image by changing a frequency of the image signal in units of line or lines; a phase modulator configured to perform magnification correction of the image by changing a cycle time of an optional pixel in units of pixel; and a phase adjustment amount-determining unit that determines whether a phase adjustment amount in a predetermined region in the horizontal scanning direction calculated by the phase modulator exceeds a threshold, wherein the magnification correction of the image by the phase modulator is switched over to the magnification correction of the image by the frequency modulator based on a determination result of the phase adjustment amount-determining unit.

Advantageously, an image forming apparatus includes a deflector configured to deflect optical beams modulated according to an image signal to thereby scan a surface of an image carrier in a horizontal scanning direction to form an image on the image carrier; an optical beam detector arranged on either side of the image carrier along the horizontal scanning direction, wherein the optical beam detectors are configured to detect an optical beams deflected by the deflector; a time difference measuring unit configured to measure a time difference between detections of the optical beams by optical beam detectors; and a magnification correcting unit configured to correct, based on the time difference, a magnification in the horizontal scanning direction of the image on the image carrier. The magnification correcting unit includes a frequency modulator configured to perform magnification correction of the image by changing a frequency of the image signal in units of line or lines; a phase modulator configured to magnification correction of the image by changing a cycle time of an optional pixel in units of pixel; a phase adjustment amount-determining unit that determines whether a phase adjustment amount in a predetermined region in the horizontal scanning direction calculated by the phase modulator exceeds a threshold; and a predetermined region-changing unit that changes the predetermined region corresponding to an image area in the horizontal scanning direction, wherein the magnification correction of the image by the phase modulator is switched over to the magnification correction of the image by the frequency modulator based on a determination result of the phase adjustment amount-determining unit.

Advantageously, an image forming apparatus includes a deflector configured to deflect optical beams modulated according to an image signal to thereby scan a surface of an image carrier in a horizontal scanning direction to form an image on the image carrier; an optical beam detector arranged on either side of the image carrier along the horizontal scanning direction, wherein the optical beam detectors are configured to detect an optical beams deflected by the deflector; a time difference measuring unit configured to measure a time difference between detections of the optical beams by optical beam detectors; and a magnification correcting unit configured to correct, based on the time difference, a magnification in the horizontal scanning direction of the image on the image carrier. The magnification correcting unit includes a frequency modulator configured to perform magnification correction of an image by changing a frequency of the image signal in units of line or lines; a phase modulator configured to perform magnification correction of the image by changing a cycle time of an optional pixel in units of pixel; a phase adjustment amount-determining unit that determines whether a phase adjustment amount in a predetermined region in the horizontal scanning direction calculated by the phase modulator exceeds a threshold; and a predetermined region-changing unit that changes the predetermined region depending on a size of a transfer paper, wherein the magnification correction of the image by the phase modulator is switched over to the magnification correction of the image by the frequency modulator based on a determination result of the phase adjustment amount-determining unit.

Advantageously, an image forming apparatus includes a deflector configured to deflect optical beams modulated according to an image signal to thereby scan a surface of an image carrier in a horizontal scanning direction to form an image on the image carrier; an optical beam detector arranged on either side of the image carrier along the horizontal scanning direction, wherein the optical beam detectors are configured to detect an optical beams deflected by the deflector; a time difference measuring unit configured to measure a time difference between detections of the optical beams by optical beam detectors; and a magnification correcting unit configured to correct, based on the time difference, a magnification in the horizontal scanning direction of the image on the image carrier. The magnification correcting unit includes a frequency modulator configured to perform magnification correction of an image by changing a frequency of the image signal in units of line or lines; a phase modulator configured to perform magnification correction of the image by fixing the frequency and changing a cycle time of an optional pixel in the unit of pixel; a phase adjustment amount-determining unit that determines whether a phase adjustment amount calculated by the phase modulator exceeds a threshold; and a specified region-changing unit that changes the threshold based on a type of the image. The phase modulator performs the magnification correction of the image until the phase adjustment amount-determining unit determines that the phase adjustment amount exceeds the threshold, and the frequency modulator performs the magnification correction of the image after it is determined that the phase adjustment amount exceeds the threshold.

Advantageously, an image forming apparatus includes a deflector configured to deflect optical beams modulated according to an image signal to thereby scan a surface of an image carrier in a horizontal scanning direction to form an image on the image carrier; an optical beam detector arranged on either side of the image carrier along the horizontal scanning direction, wherein the optical beam detectors are configured to detect an optical beams deflected by the deflector; a time difference measuring unit configured to measure a time difference between detections of the optical beams by optical beam detectors; and a magnification correcting unit configured to correct, based on the time difference, a magnification in the horizontal scanning direction of the image on the image carrier. The magnification correcting unit includes a frequency modulator configured to perform magnification correction of an image by changing a frequency of the image signal in units of a line or lines; a phase modulator configured to perform magnification correction of the image by fixing the frequency and changing a cycle time of an optional pixel in units of pixel; a phase adjustment amount-determining unit that determines whether a phase adjustment amount in a predetermined region in the horizontal scanning direction calculated by the phase modulator exceeds a threshold; and a threshold-changing unit that changes the threshold based on a type of the image, wherein the magnification correction of the image by the phase modulator is switched over to the magnification correction of the image by the frequency modulator based on a determination result of the phase adjustment amount-determining unit.

Advantageously, an image forming apparatus includes a deflector configured to deflect optical beams modulated according to an image signal to thereby scan a surface of an image carrier in a horizontal scanning direction to form an image on the image carrier; an optical beam detector arranged on either side of the image carrier along the horizontal scanning direction, wherein the optical beam detectors are configured to detect an optical beams deflected by the deflector; a time difference measuring unit configured to measure a time difference between detections of the optical beams by optical beam detectors; and a magnification correcting unit configured to correct, based on the time difference, a magnification in the horizontal scanning direction of the image on the image carrier. The magnification correcting unit includes a main position correcting unit configured to perform magnification correction of the image by changing a beam spot position interval on a scanning line in units of a line or lines; a sub position correcting unit configured to perform magnification correction of the image by changing a beam spot position interval on a scanning line in units of pixel; and a position adjustment amount-determining unit that determines whether a beam spot position adjustment amount corresponding to each of a plurality of developing colors preset by the sub position correcting unit exceeds a threshold preset for each of the plurality of developing colors, wherein the magnification correction of the image by the sub position correcting unit is changed over to the magnification correction of the image by the main position correcting unit based on a determination result of the position adjustment amount-determining unit.

Advantageously, an image forming apparatus includes a deflector configured to deflect optical beams modulated according to an image signal to thereby scan a surface of an image carrier in a horizontal scanning direction to form an image on the image carrier; an optical beam detector arranged on either side of the image carrier along the horizontal scanning direction, wherein the optical beam detectors are configured to detect an optical beams deflected by the deflector; a time difference measuring unit configured to measure a time difference between detections of the optical beams by optical beam detectors; and a magnification correcting unit configured to correct, based on the time difference, a magnification in the horizontal scanning direction of the image on the image carrier. The magnification correcting unit includes a main position correcting unit configured to perform magnification correction of the image by changing a beam spot position interval on a scanning line in units of a line or lines; a sub position correcting unit configured to perform magnification correction of the image by changing a beam spot position interval on a scanning line in units of pixel; and a position adjustment amount-determining unit that determines whether a beam spot position adjustment amount by the sub position correcting unit, in a predetermined region in the horizontal scanning direction set for each of a plurality of colors, exceeds a threshold preset for each of the colors, wherein the magnification correction of the image by the sub position correcting unit is changed over to the magnification correction of the image by the main position correcting unit based on a determination result of the position adjustment amount-determining unit.

Advantageously, an image forming apparatus includes a deflector configured to deflect optical beams modulated according to an image signal to thereby scan a surface of an image carrier in a horizontal scanning direction to form an image on the image carrier; an optical beam detector arranged on either side of the image carrier along the horizontal scanning direction, wherein the optical beam detectors are configured to detect an optical beams deflected by the deflector; a time difference measuring unit configured to measure a time difference between detections of the optical beams by optical beam detectors; and a magnification correcting unit configured to correct, based on the time difference, a magnification in the horizontal scanning direction of the image on the image carrier. The magnification correcting unit includes a frequency modulator configured to perform magnification correction of the image by changing a frequency of the image signal in units of a line or lines; a phase modulator configured to perform magnification correction of the image by fixing the frequency and changing a cycle time of an optional pixel in units of pixel; and a frequency adjustment amount converter that converts a phase adjustment amount set by the phase modulator to a frequency adjustment amount for the frequency modulator.

Advantageously, an image forming apparatus includes a deflector configured to deflect optical beams modulated according to an image signal to thereby scan a surface of an image carrier in a horizontal scanning direction to form an image on the image carrier; an optical beam detector arranged on either side of the image carrier along the horizontal scanning direction, wherein the optical beam detectors are configured to detect an optical beams deflected by the deflector; a time difference measuring unit configured to measure a time difference between detections of the optical beams by optical beam detectors; and a magnification correcting unit configured to correct, based on the time difference, a magnification in the horizontal scanning direction of the image on the image carrier. The magnification correcting unit includes a frequency modulator configured to perform magnification correction of the image by changing a frequency of the image signal in units of a line or lines; a phase modulator configured to perform magnification correction of the image by fixing the frequency and changing a cycle time of an optional pixel in units of pixel; a frequency adjustment amount converter configured to convert a phase adjustment amount set by the phase modulator to a frequency adjustment amount for the frequency modulator; a phase adjustment amount-determining unit that determines whether the phase adjustment amount in a predetermined region in the horizontal scanning direction exceeds a threshold; and a region-changing unit that changes the predetermined region according to a horizontal-scanning imaging range, wherein when the phase adjustment amount-determining unit determines that the phase adjustment amount does not exceed the threshold, the phase modulator performs the magnification correction of the image, and when it is determined that the phase adjustment amount exceeds the threshold, magnification correction of an image is performed based on the frequency adjustment amount, to which the frequency adjustment amount converter converts the phase adjustment amount set by the phase modulator.

Advantageously, an image forming apparatus includes a deflector configured to deflect optical beams modulated according to an image signal to thereby scan a surface of an image carrier in a horizontal scanning direction to form an image on the image carrier; an optical beam detector arranged on either side of the image carrier along the horizontal scanning direction, wherein the optical beam detectors are configured to detect an optical beams deflected by the deflector; a time difference measuring unit configured to measure a time difference between detections of the optical beams by optical beam detectors; and a magnification correcting unit configured to correct, based on the time difference, a magnification in the horizontal scanning direction of the image on the image carrier. The magnification correcting unit includes a frequency modulator configured to perform magnification correction of the image by changing a frequency of the image signal in units of a line or lines; a phase modulator configured to perform magnification correction of the image by fixing the frequency and changing a cycle time of an optional pixel in units of pixel; a frequency adjustment amount converter configured to convert a phase adjustment amount set by the phase modulator to a frequency adjustment amount for the frequency modulator; a phase adjustment amount-determining unit determines whether the phase adjustment amount in a predetermined region in the horizontal scanning direction exceeds a threshold; and a region-changing unit that changes the predetermined region depending on a size of a transfer paper. When the phase adjustment amount-determining unit determines that the phase adjustment amount does not exceed the threshold, the phase modulator performs the magnification correction of the image, and when the phase adjustment amount-determining unit determines that the phase adjustment amount exceeds the threshold, magnification correction of an image is performed based on the frequency adjustment amount, to which the frequency adjustment amount converter converts the phase adjustment amount set by the phase modulator.

The other features, and advantages of the present invention are specifically set forth in or will become apparent from the following detailed description of the invention when read in conjunction with the accompanying drawings.

The above and other features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic diagram of relevant parts of an optical scanner and a photoconductor together with an associated control system of an image forming apparatus according to a first embodiment of the present invention;
FIG. 2 depicts an internal structure of a laser printer that is an example of the image forming apparatus;
FIG. 3 is a flowchart of a process procedure for a magnification correction of an image performed by the control system in the image forming apparatus according to the first embodiment;
FIG. 4 is a flowchart of a process procedure for a magnification correction of an image performed by a control system in an image forming apparatus according to a second embodiment of the present invention;
FIG. 5 is a schematic diagram of relevant parts of an optical scanner and a photoconductor together with an associated control system of an image forming apparatus according to a third embodiment of the present invention;
FIG. 6 is a flowchart of a process procedure for a magnification correction of an image performed by the control system in the image forming apparatus according to the third embodiment;
FIG. 7 is a schematic diagram of relevant parts of an optical scanner and a photoconductor together with an associated control system of an image forming apparatus according to a fourth embodiment of the present invention;
FIG. 8 is a flowchart of a process procedure for a magnification correction of an image performed by the control system in the image forming apparatus according to the fourth embodiment;
FIG. 9 is a flowchart of a process procedure for a magnification correction of an image performed by a control system in an image forming apparatus according to a sixth embodiment of the present invention;
FIG. 10A and FIG. 10B are schematics for explaining how the horizontal scanning direction is divided into regions by an image forming apparatus according to a seventh embodiment of the present invention;
FIG. 11 is a flowchart of a process procedure for a magnification correction of an image performed by a control system in the image forming apparatus according to the seventh embodiment;
FIG. 12 is a flowchart of a process procedure for a magnification correction of an image performed by a control system in an image forming apparatus according to an eighth embodiment of the present invention;
FIG. 13 is a flowchart of a process procedure for a magnification correction of an image performed by a control system in an image forming apparatus according to a ninth embodiment of the present invention;
FIG. 14 is a flowchart of a process procedure for a magnification correction of an image performed by a control system in an image forming apparatus according to a tenth embodiment of the present invention;
FIG. 15 is a flowchart of a process procedure for a magnification correction of an image performed by a control system in an image forming apparatus according to an eleventh embodiment of the present invention;
FIG. 16 is a flowchart of a process procedure for a magnification correction of an image performed by a control system in an image forming apparatus according to a twelfth embodiment of the present invention;
FIG. 17 is a flowchart of a process procedure for a magnification correction of an image performed by a control system in an image forming apparatus according to a thirteenth embodiment of the present invention;

### DETAILED DESCRIPTION OF THE PREFERRED EMBODIMENTS

Exemplary embodiments of the present invention will be explained below in detail with reference to the accompanying drawings.

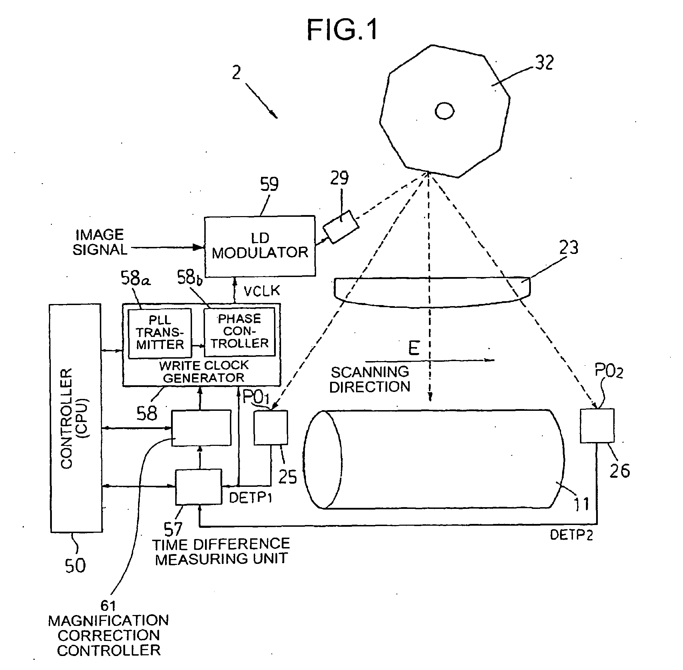

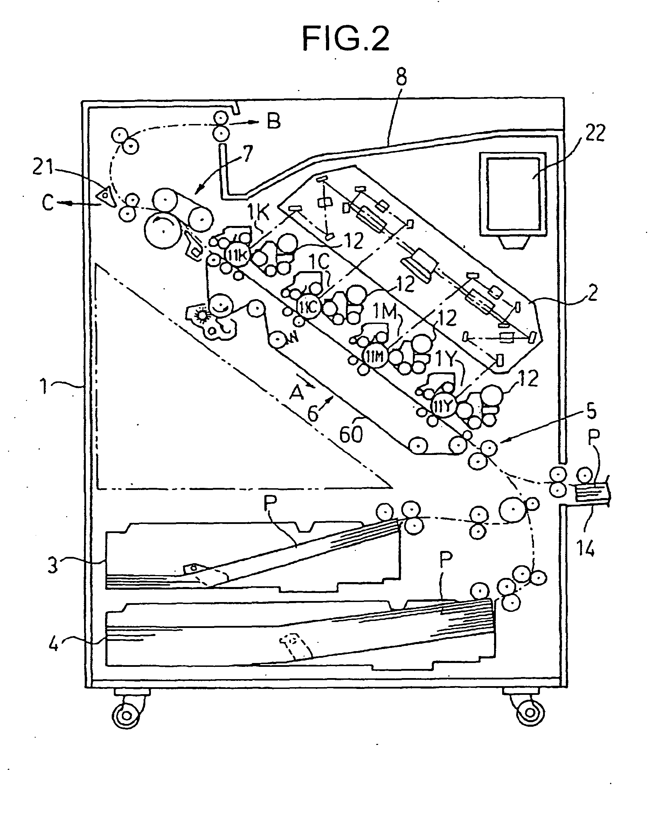

FIG. 1 is a schematic diagram of relevant parts of an optical scanner and a photoconductor together with an associated control system of an image forming apparatus according to a first embodiment of the present invention. FIG. 2 depicts an internal structure of a laser printer as an example of the image forming apparatus.

The laser printer includes an optical scanner 2. As shown in FIG. 1, the optical scanner 2 includes a polygon mirror 32, a photoconductor 11, sensors 25 and 26, a time difference measuring unit 57, a magnification correction controller 61, and a write clock generator 58. The polygon mirror 32 functions as a deflector that deflects optical beams modulated based on an image signal in the horizontal scanning direction thereby scanning the photoconductor 11 with the optical beams and forming an image on the photoconductor 11. The sensors 25 and 26 are situated on positions PO₁ and PO₂ along the horizontal scanning direction on either side of the photoconductor 11 and function as optical beam detectors that respectively detect optical beams deflected by the polygon mirror 32. The time difference measuring unit 57 measures the time difference between when the sensor 25 detects the optical beam until when the sensor 26 detects the optical beam. The magnification correction controller 61 functions as a magnification correcting unit that corrects magnification of the image on the photoconductor 11 in the horizontal scanning direction based on the time difference measured by the time difference measuring unit 57. The write clock generator 58 generates a write clock VCLK.

The write clock generator 58 includes a PLL transmitter 58a and a phase controller 58b. The PLL transmitter 58a functions as a frequency modulator that performs magnification correction of the image on the photoconductor 11 in the horizontal scanning direction by changing the frequency of the image signal in the unit of a line or in the unit of a plurality of lines. The phase controller 58b functions as a phase modulator that performs magnification correction of the image on the photoconductor 11 in the horizontal scanning direction by fixing the frequency and changing the cycle time of a target pixel in the unit of pixel. In the first embodiment, the magnification correction controller 61 also functions as the frequency modulator and the phase modulator.

The magnification correction controller 61 also functions as a phase adjustment amount-determining unit that determines the magnitude correlation between the phase adjustment amount between the sensors 25 and 26 calculated by the phase modulator by fixing the frequency of the image signal and a threshold.

A controller 50, which is a microcomputer, controls such that the phase modulator performs magnification correction of an image in the horizontal scanning direction until the phase adjustment amount exceeds a threshold, and once the phase adjustment amount has exceeded the threshold, controls such that the frequency modulator performs magnification correction of the image in the horizontal scanning direction, based on the determination result of the magnification correction controller 61.

The laser printer forms images by using an electrographic method. The configuration for forming images using the electrographic method is shown in FIG. 2. In other words, the laser printer includes photosensitive drums 11Y, 11M, 11C, and 11K (hereinafter, simply as the photoconductor(s) 11, unless otherwise specified) that functions as image carriers on which an image of respective colors of yellow (Y), magenta (M), cyan (C), and black (B), are formed. The photosensitive drums 11Y, 11M, 11C, and 11K are situated with a space therebetween along the direction shown by an arrow A. A belt drive 6 drives and moves a transfer carrier belt 60 in the direction shown by the arrow A. A development unit 12 is provided corresponding to each of the four photoconductors 11.

The optical scanner 2 is situated above the four photoconductors 11. Paper feed cassettes 3 and 4 are provided in the lower part of an apparatus body 1 of the laser printer, and a pair of resist rollers 5 and the belt drive 6 are also provided. The belt drive 6, in the state with transfer paper (sheet) P carried thereon, sequentially carries the transfer paper P to toner image forming units (1Y, 1M, 1C, and 1K) where the photoconductors 11 are respectively provided, and carries the transfer paper P to a fixing unit 7. In the first embodiment, the belt drive 6 functions as a transfer unit.

Further, the laser printer includes a paper ejection tray 8, a manual feed tray 14, a toner supply container 22, and the like.

The transfer paper P is carried on a transport route shown by one-dot chain line in FIG. 2, an image is formed thereon, and the transfer paper P is ejected on the paper ejection tray 8.

When starting the image forming operation, the transfer paper P fed from the paper feed cassettes 3, 4, or the manual feed tray 14 is carried to the resist rollers 5, while being guided by a transport guide plate and stopped there temporarily.

The resist rollers 5 rotate at a predetermined timing. As a result, the resist rollers 5 carry the transfer paper P onto the transfer carrier belt 60. The transfer paper P gets electrostatically attracted onto the belt surface. The transfer paper P is then carried to the toner image forming unit, where the photoconductor 11 is present, by the transfer carrier belt 60 that is rotating in the direction shown by the arrow A.

Toner images of the respective colors formed on the respective photosensitive drums 11Y, 11M, 11C, and 11K are sequentially transferred and superposed on the transfer paper P by an action of transfer electric field and a nip pressure in the toner image forming unit. Accordingly, a full colored toner image is formed on the transfer paper P.

After the toner image is transferred onto the transfer paper P, the surfaces of the photosensitive drums 11Y, 11M, 11C, and 11K are cleaned by respective cleaning units and the electricity is removed therefrom. Thus, the photosensitive drums 11Y, 11M, 11C, and 11K become ready for formation of next image.

The fixing unit 7 fixes the full-color toner image onto the transfer paper P. The transfer paper P with the fixed full-color toner image is then carried in a first paper ejection direction shown by an arrow B or a second paper ejection direction shown by an arrow C. In which direction the transfer paper P is carried depends on a switching position of a switching guide 21.

When the transfer paper P is carried in the first paper ejection direction and ejected onto the paper ejection tray 8, the transfer paper P is ejected in the paper ejection tray 8 in a so-called face down state, with the image surface facing down. When the transfer paper P is carried in the second paper ejection direction, the transfer paper P is carried toward a post-processor (not shown). The post-processor can be a sorter, a stapler, or the like.

In the optical scanner 2, a laser diode (LD) 29 that functions as an optical beam generator emits optical beams (laser beams) equivalent of image signals. Although not shown in the drawings, the optical beams pass through a collimate lens and a cylindrical lens, and finally fall on the rotating polygon mirror 32. The polygon mirror 32 deflects the optical beams so that optical beams pass through an fθ lens 23 and a toroidal lens (hereinafter, "BTL") (not shown), and fall on the photoconductor 11. As the polygon mirror 32 rotates, the photoconductor 11 is scanned in the scanning direction with the optical beams. The BTL performs focusing mainly in a vertical scanning direction (i.e., sub scanning direction), that is, performs condensing function and position correction (cross-scan error compensation and the like) in the vertical scanning direction.

In FIG. 1, only one of the four photoconductors 11 is shown. The other three photoconductors and corresponding optical scanners have the same configuration, with only the color of an image to be formed being different, and hence the illustration thereof is omitted.

A driving unit, a motor, for example, rotates the polygon mirror 32. The fθ lens mainly performs velocity transformation. In other words, when optical beams of an isometric velocity that are deflected from the polygon mirror 32 enter into the fθ lens 23, they are converted into optical beams of a constant velocity.

When an optical beam scans the photoconductor 11, the optical beam first falls on the sensor 25, scans the photoconductor 11 in the direction shown by an arrow E, and finally falls on the sensor 26. Thus, there is a time lag, or a time difference, between when the optical beam is detected in the sensor 25 and when the optical beam is detected in the sensor 26. The sensor 25 also serves as a synchronism detection sensor for detecting a laser beam-scanning synchronization signal, which becomes a synchronism detection signal.

When an optical beam is detected, the sensor 25 outputs a laser beam detection signal DETP1, and the sensor 26 outputs a laser beam detection signal DETP2. The laser beam detection signals DETP1 and DETP2 are transmitted to the time difference measuring unit 57. The time difference measuring unit 57 measures a difference between the time of arrival of the laser beam detection signals DETP1 and DETP2. As the polygon mirror 32 rotates, the laser beam detection signals DETP1 and DETP2 arrive one after the other. The time difference measuring unit 57 calculates an average of a plurality of measured times as a time difference. The time difference measuring unit 57 measures the time of arrival of the laser beam detection signals DETP1 and DETP2 by using timing set by the controller (CPU) 50. The time difference measuring unit 57 transmits the time difference to the magnification correction controller 61.

The magnification correction controller 61 includes a storage unit that stores initial set values and current set values of the set write clock frequency and phase shift value (phase adjustment amount). The controller 50 sends the initial set values and the current set values to the magnification correction controller 61. The magnification correction controller 61 calculates the phase shift value (phase adjustment amount) when an optimum write clock frequency is set, by using the fact that the image magnification in the horizontal scanning direction is changed by the frequency of the write clock, and by using the fact that the image magnification is changed by shifting the phase in the case of such a short time that cannot be adjusted by adjusting a write clock.

The magnification correction controller 61 has a function of calculating the optimum phase shift value (phase adjustment amount) by fixing the write clock frequency, and also has a function of comparing the phase shift value calculated with the threshold set by the controller 50, thereby transmitting a write clock setting signal and a control signal for executing the phase shift to the write clock generator 58 at a predetermined timing, respectively.

The write clock generator 58 includes the PLL transmitter 58a that generates a clock n times as large as a write clock VCLK upon reception of a clock from an oscillator (not shown), and the phase controller 58b having a function of dividing the frequency of a PLL transmission clock by n, synchronized with the laser beam detection signal DETP1 as a synchronism detection signal to generate the write clock VCLK synchronized with the laser beam detection signal DETP1 and having a function of shifting (changing) the write clock cycle time of an optional pixel in the unit of pixel by adding or subtracting an integral multiple of the half cycle of the PLL transmission clock to or from a special cycle of the write clock.

The write clock generator 58 generates the write clock and executes the phase shift under control of the magnification correction controller 61.

The write clock VCLK subjected to the image magnification correction in the horizontal scanning due to changeability of the write clock frequency and the phase shift value by the write clock generator 58 is transmitted to an LD modulator 59 that functions as an optical beam generator actuator.

The LD modulator 59 controls lighting of the laser diode 29 in an LD unit according to the image signal synchronized with the write clock VCLK from the write clock generator 58. Accordingly, laser beams modulated according to the image signal are emitted from the laser diode 29.

Although the write clock generator 58, the time difference measuring unit 57, and the magnification correction controller 61 are shown as separate units, they can be combined into one unit.

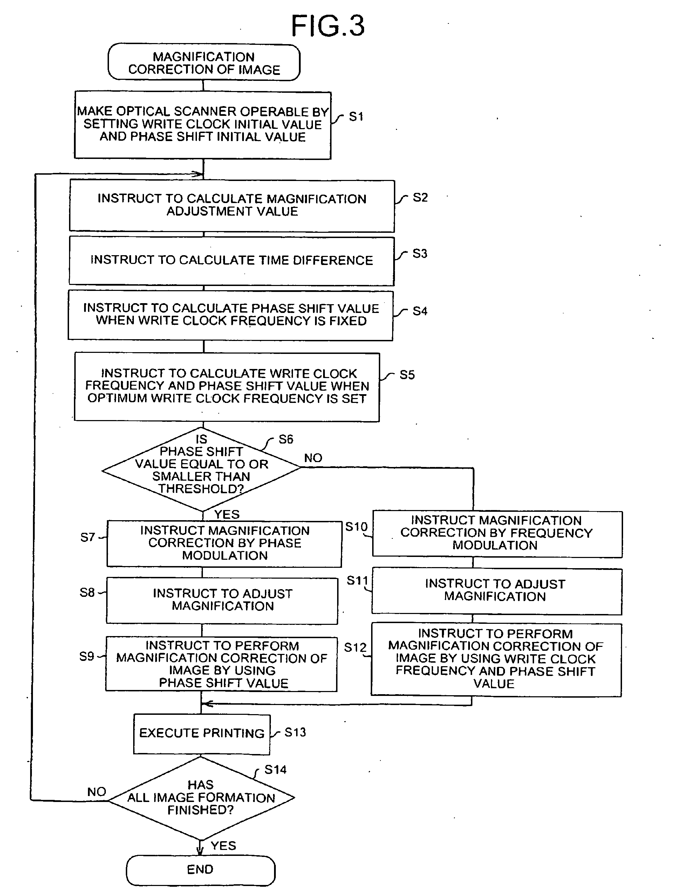

The image forming apparatus that includes the controller 50 performs a magnification correction of an image based on the flowchart shown in FIG. 3.

At step S1, the controller 50 sets a write clock initial value and a phase shift initial value in the magnification correction controller 61. This setting can be performed at a predetermined timing such as when the power is turned on or when r the image forming apparatus is re-used after being stopped. As a result, the optical scanner 2 becomes operable.

At step S2, the controller 50 outputs instructions to instruct the time difference measuring unit 57 and the magnification correction controller 61 to calculate a magnification adjustment value.

In the meanwhile, laser beams are output from the laser diode 29, and the laser beams are deflected by the polygon mirror 32 towards the sensor 25, photoconductor 11, and the sensor 26 via the fθ lens 23, and the sensors 25 and 26 output the laser beam detection signals DETP1 and DETP2. At step S3, the controller instructs the time difference measuring unit 57 to calculate the time difference, and send the time difference to the magnification correction controller 61.

At step S4, the controller 50 instructs the magnification correction controller 61 to calculate a phase shift value (phase adjustment amount), when the write clock frequency is fixed, from the time difference. At step S5, substantially simultaneously with the step S4, the controller 50 instructs the magnification correction controller 61 to calculate a write clock frequency (write clock value) and a phase shift value, when an optimum write clock frequency is set, from the time difference.

At step S6, the controller 50 compares the phase shift value (phase adjustment amount) with a preset threshold. In other words, the controller 50 checks whether the phase shift value is equal to or smaller than the threshold, and stores the result (magnitude correlation) in the storage unit.

If the phase shift value is equal to or smaller than the threshold (step S6, YES), at step S7, the controller 50 determines that magnification correction of an image is to be executed by phase modulation, and outputs an instruction to that effect to the write clock generator 58. In the magnification correction with the phase modulation, the magnification correction of the image can be performed without lengthening the interval between sheets so that the printing does not stop even during continuous printing.

At step S8, the controller 50 issues a magnification adjustment instruction to the magnification correction controller 61 at the timing effective for printing after having calculated the phase shift value. At step S9, the controller 50 issues a control signal to the write clock generator 58 so as to perform magnification correction of the image by using the phase shift value calculated at step S4. Accordingly, the magnification correction of the image is performed by phase shifting.

If the phase shift value is larger than the threshold (step S6, NO), at step S10, the controller 50 determines that magnification correction of the image is to be executed by the frequency modulation and outputs an instruction to that effect to the write clock generator 58. In the magnification correction with the frequency modulation, magnification correction is performed by changing the write clock frequency (frequency of an image signal) in the unit of a line or in the unit of a plurality of lines.

The magnification correction by the frequency modulation cannot be performed at any timing during image formation, because, this type of correction takes time. In other words, in continuous printing in which time interval between printing of images on two sheets is short, magnification correction by the frequency modulation cannot be performed. As a result, if the continuous printing is being performed, the printing is temporarily suspended, and at step S11, the controller 50 issues a magnification adjustment instruction to the magnification correction controller 61.

At step S12, the controller 50 issues a control sigal to the write clock generator 58 so as to perform magnification correction of the image with optimum write clock frequency and phase shift value that are calculated at step S5. Accordingly, magnification correction of the image is performed by frequency modulation.

At step S13, printing is executed according to a control signal set and transmitted to the write clock generator 58 at step S9, or the control signal set and transmitted to the write clock generator 58 at step S12.

At step S14, the controller 50 determines whether the all the images have been formed. If all the images have been formed, the process procedure is finished. If some of the images have not been formed yet, the system control returns to step S2, and the same process procedure is repeated for the remaining images.

Thus, in the image forming apparatus (laser printer) according to the first embodiment, magnification correction of an image is performed by changing the cycle time of an optional pixel in the unit of pixel until the phase adjustment value (phase shift value) exceeds the preset threshold, and after the phase adjustment value exceeds the preset threshold, magnification correction of the image is performed by changing the frequency of the image signal in the unit of a line or in the unit of a plurality of lines. In the latter case, although continuous printing needs to be suspended temporarily, but the number of executing magnification correction of the image by frequency modulation can be reduced, and hence the productivity can be improved.

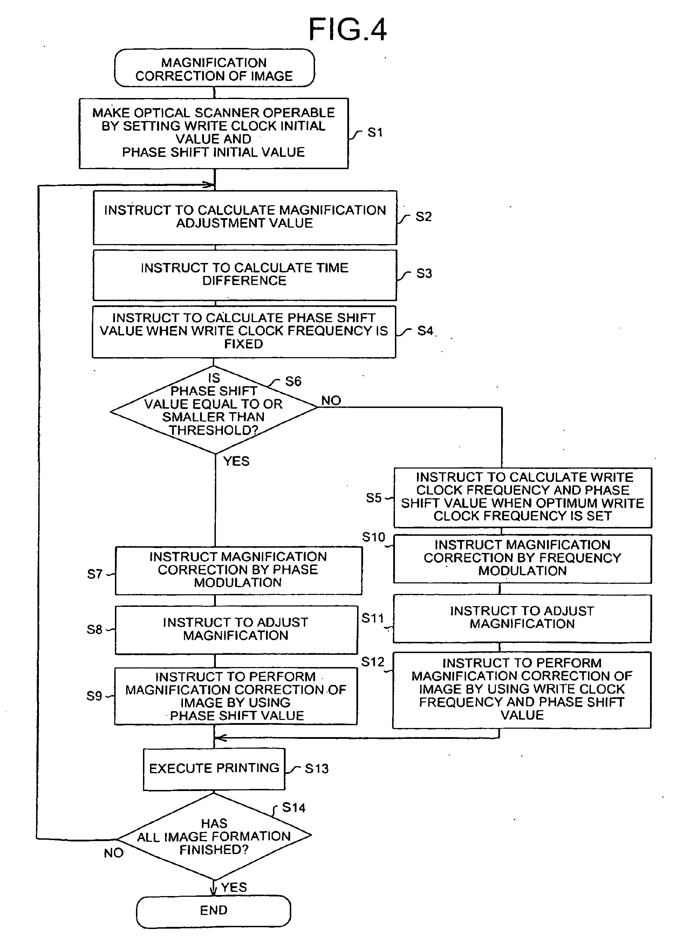

FIG. 4 is a flowchart of a process procedure for the magnification correction of an image performed by a control system in an image forming apparatus according to a second embodiment of the present invention. For the brevity of explanation, in FIG. 4, the steps that are similar to those shown in FIG. 3 have been designated with like step numbers. The configuration of the image forming apparatus according to the second embodiment is the same as that in FIG. 2. Moreover, the configuration of the control system and the scanner is the same as that in FIG. 1, but only the content of the control performed by the controller (CPU) is different. Therefore, illustrations of the configuration of the image forming apparatus and the control system are omitted as well, and as required, explanation is given by using the reference signs used in FIG. 1.

The steps S1 to S4 in FIG. 4 are the same as those in FIG. 3. The step S5 is performed after the step S6 but before the step S10.

The steps S7 to S14 in FIG. 4 are the same as those in FIG. 3.

In other words, in the second embodiment, only when the phase shift value with the write clock fixed is larger than the threshold, calculation of the write clock value and the phase shift value when the optimum write clock frequency is set is performed.

The same effects as in the first embodiment can be obtained in the second embodiment.

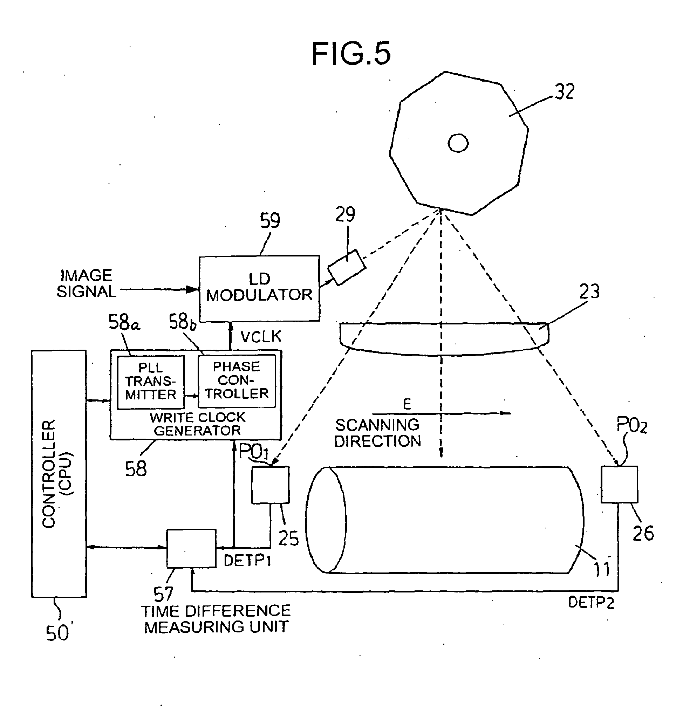

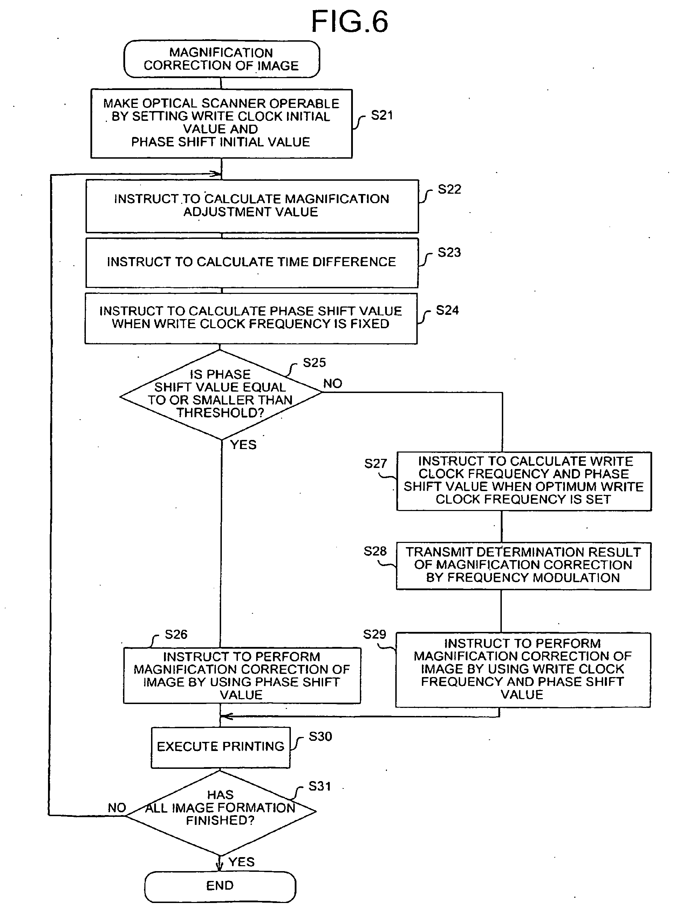

FIG. 5 is a schematic diagram of relevant parts of an optical scanner and a photoconductor together with an associated control system of an image forming apparatus according to a third embodiment of the present invention; and FIG. 6 is a flowchart of a process procedure for a magnification correction of an image performed by the control system. In FIG. 5, the parts that are similar to those shown in FIG. 1 have been designated with like reference signs.

The configuration of the image forming apparatus according to the third embodiment is the same as that in FIG. 2.

The image forming apparatus according to the third embodiment is different from the image forming apparatus according to the first embodiment in that a controller (CPU) 50' is provided instead of the controller 50, and the magnification correction controller 61 is not provided. The controller 50' is a microcomputer same as the controller 50, and performs the functions of both the controller 50 and the magnification correction controller 61.

The time difference measuring unit 57 performs time difference measurement and calculation between the laser beam detection signals DETP1 and DETP 2, and transmits the measurement result and the calculation result to the controller 50'. The controller 50' has a storage unit that stores the initial set values and the current set values of the write clock frequency and the phase shift value (phase adjustment amount), and has a function of calculating an optimum write clock frequency and a phase shift value by using the fact that the image magnification in the horizontal scanning direction is changed by the frequency of the optimum write clock, and by using the fact that the image magnification is changed by shifting the phase in the case of such a short time that cannot be adjusted by adjusting a write clock.

The controller 50' has a function of calculating the optimum phase shift value (phase adjustment amount) by fixing the write clock frequency, and also has a function of comparing the phase shift value calculated with the preset threshold, thereby transmitting a write clock setting signal and a control signal for executing the phase shift to the write clock generator 58 at a predetermined timing respectively.

That is, in the third embodiment, the controller 50' functions as the phase adjustment amount-determining unit. The controller 50' also functions as a frequency modulator together with the PLL transmitter 58a, and as a phase modulator together with the phase controller 58b.

In FIG. 5, the write clock generator 58 and the time difference measuring unit 57 are shown as separate units; however, they can be combined in one unit.

The image forming apparatus that includes the controller 50' performs a magnification correction of an image based on the flowchart shown in FIG. 6.

At step S21, the controller 50' sets a write clock initial value and a phase shift initial value in the write clock generator 58. This setting can be performed at a predetermined timing such as when the power is turned on or when r the image forming apparatus is re-used after being stopped. As a result, the optical scanner 2 becomes operable.

At next step S22, the controller 50' outputs an instruction to the time difference measuring unit 57 to calculate a magnification adjustment value.

In the meanwhile, laser beams are output from the laser diode 29, and the laser beams are deflected by the polygon mirror 32 towards the sensor 25, photoconductor 11, and the sensor 26 via the fθ lens 23, and the sensors 25 and 26 output the laser beam detection signals DETP1 and DETP2. At step S23, the controller 50' instructs the time difference measuring unit 57 to calculate the time difference, and send the time difference to the controller 50'.

At next step S24, the controller 50 calculate a phase shift value (phase adjustment amount), when the write clock frequency is fixed, from the time difference received from the time difference measuring unit 57. At step S25, the controller 50' compares the phase shift value (phase adjustment amount) with a preset threshold, and stores the result (magnitude correlation) in the storage unit.

If the phase shift value is equal to or smaller than the threshold (step S25, YES), at step S26, the controller 50' determines that magnification correction of an image is to be executed by phase modulation, and outputs an instruction to that effect to the write clock generator 58.

If the phase shift value is larger than the threshold (step S25, NO), at step S27, the controller 50' calculates a write clock frequency and a phase shift value, when an optimum write clock frequency is set, from the time difference.

At step S28, the controller 50' outputs to the write clock generator 58 a control signal for performing magnification correction of an image based on the write clock frequency and the phase shift value. At step S29, the controller 50' sends a control signal for performing magnification correction of an image based on the write clock frequency and the phase shift value calculated at step S27 to the write clock generator 58. Accordingly, magnification correction of the image is performed by the frequency modulation.

In the case of magnification correction by frequency modulation, the write clock is changed, and hence, magnification correction cannot be performed at any timing during image formation. Further, since a certain period of time is necessary for the magnification correction processing, it is necessary to have an interval between sheets during continuous printing. Accordingly, continuous printing is temporarily suspended, and the control signal is sent to the write clock generator 58 at a convenient timing.

At next step S30, printing is executed at the write clock frequency, with the write clock frequency changed according to the control signal set and transmitted to the write clock generator 58 at step S26, or the control signal set and transmitted to the write clock generator 58 at step S29.

At step S31, the controller 50' determines whether the all the images have been formed. If all the images have been formed, the process procedure is finished. If some of the images have not been formed yet, the system control returns to step S22, and the same process procedure is repeated for the remaining images.

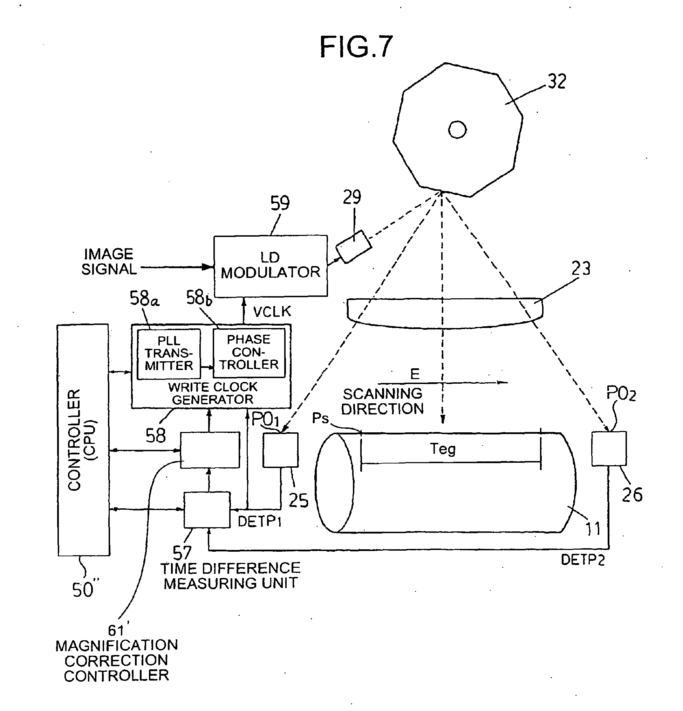

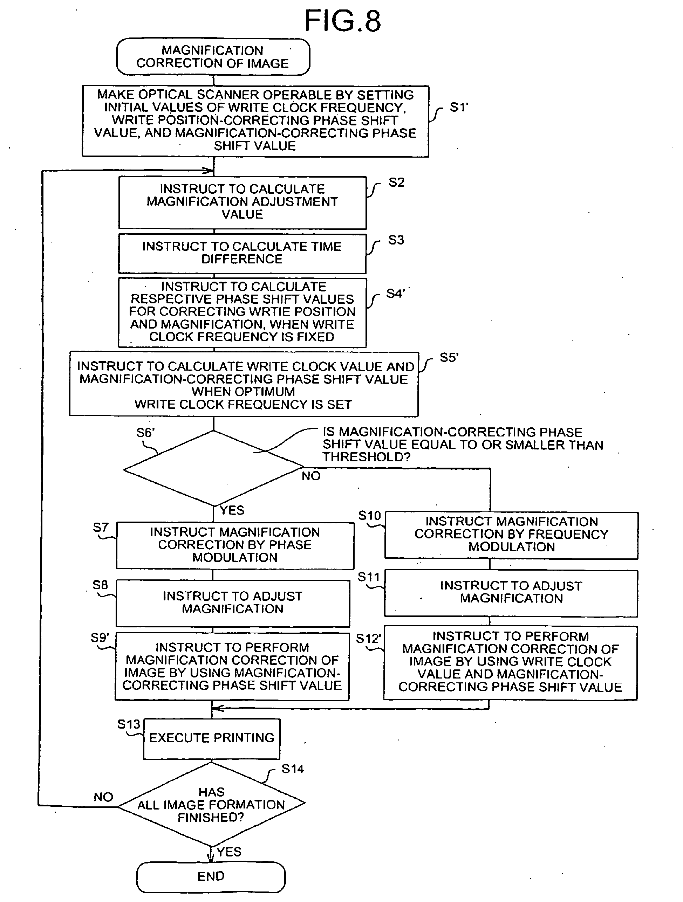

FIG. 7 is a schematic diagram of relevant parts of an optical scanner and a photoconductor together with an associated control system of an image forming apparatus according to a fourth embodiment of the present invention; and FIG. 8 is a flowchart of a process procedure for a magnification correction of an image performed by the control system. In FIG. 7, the parts that are similar to those shown in FIG. 1 have been designated with like reference signs. Further, in FIG. 8, the steps that are similar to those shown in FIG. 3 have been designated with like step numbers.

The configuration of the image forming apparatus according to the fourth embodiment is the same as that in FIG. 2.

The image forming apparatus according to the fourth embodiment is different from the image forming apparatus according to the first embodiment in that a write start position Ps in the horizontal scanning direction shown in FIG. 7 can be corrected by a write start position-correcting phase adjustment amount (hereinafter, as write position-correcting phase shift value), and magnification in the horizontal scanning direction can be also corrected by a magnification-correcting phase adjustment amount in the horizontal scanning direction (hereinafter, as magnification-correcting phase shift value), and that magnitude correlation between the magnification-correcting phase shift value and the set threshold is then determined, and until the magnification-correcting phase shift value as the determination result exceeds the threshold, magnification correction of an image is performed by phase modulation calculated by fixing the frequency of an image signal, and after the magnification-correcting phase shift value exceeds the threshold, magnification correction of the image is performed by frequency modulation.

Thus, in the configuration in which the optimum phase adjustment (phase shift) is performed by changing the cycle time of an optional pixel in the unit of pixel, that is, optimum write start position Ps in the horizontal scanning direction and magnification correction in the horizontal scanning direction are performed based on the write position-correcting phase shift value and the magnification-correcting phase shift value calculated by fixing the write clock frequency, a magnification correction controller 61' has a configuration including a storage unit that stores the initial set values of the write clock frequency transmitted from a controller (CPU) 50", the write position-correcting phase shift value in the horizontal scanning direction, and the magnification-correcting phase shift value, as well as the current set values.

The controller (CPU) 50" is a microcomputer that starts the routine for a magnification correction of an image shown in FIG. 8, at a predetermined timing such as after turning the power on or restarting after having stopped the machine.

At first step S1', the controller 50" sets an initial value of the write clock frequency, an initial value of the write position-correcting phase shift value (write position-correcting phase shift initial value), and an initial value of the magnification-correcting phase shift value (magnification-correcting phase shift initial value) in the magnification correction controller 61', at a predetermined timing such as after turning the power on or restarting after having stopped the machine. The controller 50" makes the optical scanner 2 printable corresponding to the set initial value of the write clock frequency and phase shift initial values. In this state, since the printing is possible, printing can be performed.

Steps S2 and S3 are same as the steps S2 and S3 shown in FIG. 3. At step S4', the magnification correction controller 61' calculates the write position-correcting phase shift value in the horizontal scanning direction and the magnification-correcting phase shift value when the write clock frequency is fixed, from a mean value or the like of the measurement result of the time difference since the sensor 25 has detected the laser beam until the sensor 26 detects the laser beam.

At step S5', the magnification correction controller 61' calculates a write clock value (frequency) and a magnification-correcting phase shift value when an optimum write clock frequency is set, from the mean value or the like of the measurement result of the time difference.

At next step S6', the controller 50" determines the magnitude correlation between the magnification-correcting phase shift value calculated at step S4' and the threshold preset in the controller 50", that is, whether the magnification-correcting phase shift value is equal to or smaller than the threshold, and stores the comparison result (magnitude correlation) in the storage unit.

According to the determination, when the magnification-correcting phase shift value is equal to or smaller than the threshold, that is, when the magnification-correcting phase shift value does not exceed the threshold (YES), the same processing and determination as those in FIG. 3 are performed at step S7 and following steps, to perform magnification correction of an image by phase modulation, with the frequency fixed. At this time, in the fourth embodiment, at step S9', magnification correction in the horizontal scanning direction is performed only by using the magnification-correcting phase shift value.

According to the determination at step S6', when the magnification-correcting phase shift value is larger than the threshold, that is, the magnification-correcting phase shift value exceeds the threshold, the same processing and determination as those in FIG. 3 are performed at step S10 and following steps, to perform magnification correction of the image by frequency modulation, in which magnification correction is performed by changing the frequency of an image signal to an optimum write clock frequency in the unit of a line or in the unit of a plurality of lines.

Thus, in the fourth embodiment, the phase adjustment amount (phase shift) at the time of fixing the write clock frequency is divided into the write position-correcting phase shift value for correcting the write start position and the magnification-correcting phase shift value for correcting the magnification in the horizontal scanning direction. Only the magnification-correcting phase shift value is compared with the threshold to determine the magnitude correlation therebetween, and magnification correction of the image by phase modulation and magnification correction of the image by frequency modulation are changed over to each other according to the determination result. Even when the changeover of the image magnification correction method is determined based on only the magnification-correcting phase shift value, there is no problem because the write position-correcting phase shift value affects little on image degradation in the image area.

Magnification correction of the image by the frequency modulation, in which the image forming operation needs to be suspended temporarily, is executed only when the magnification-correcting phase shift value exceeds the threshold. As a result, the number of executing the magnification correction of the image by the frequency modulation can be reduced, thereby improving the overall print speed (productivity of image formation) accordingly, as the whole image forming apparatus.

As a fifth embodiment of the present invention that is a modification of the fourth embodiment, the magnification correction controller 61' shown in FIG. 7 may not be provided. In other words, the configuration of the image forming apparatus according to the fifth embodiment is the same as that in the third embodiment explained with reference to FIG. 5.

In this case, the time difference measuring unit 57 shown in FIG. 7 performs time difference measurement and calculation between the laser beam detection signals DETP1 and DETP2, and transmits the measurement result and calculation result to the controller 50".

The controller 50" has a configuration including a storage unit that stores respective initial set values and current set values of the write clock frequency, the magnification-correcting phase shift value, and the write position-correcting phase shift value.

Further, the controller 50" has a function of calculating an optimum write clock frequency, and a magnification-correcting phase shift value and a write position-correcting phase shift value at the optimum frequency, a function of calculating an optimum magnification-correcting phase shift value by fixing the write clock frequency, and a function of comparing the calculated magnification-correcting phase shift value with the preset threshold, and transmits a write clock setting signal and a control signal for performing phase shift to the write clock generator 58 at a predetermined timing, respectively.

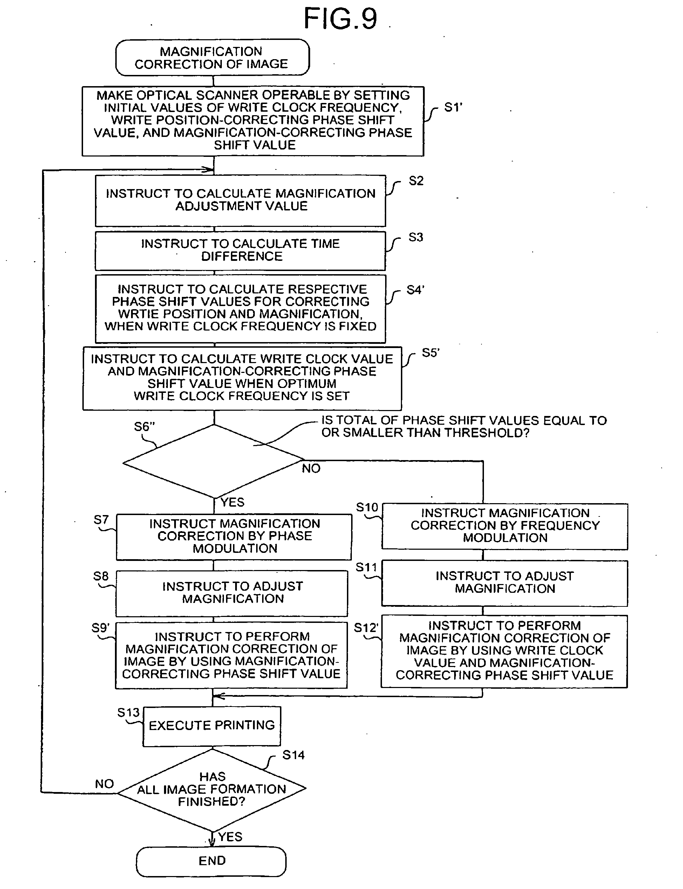

FIG. 9 is a flowchart of a process procedure for a magnification correction of an image performed by a control system in an image forming apparatus according to a sixth embodiment of the present invention. For the brevity of explanation, in FIG. 9, the steps that are similar to those shown in FIG. 8 have been designated with like step numbers.

The configuration of the image forming apparatus according to the sixth embodiment is the same as that in FIG. 2. The control system is the same as that of the fourth embodiment explained with reference to FIG. 7 (or may be configured as shown in FIG. 5), and only the content of the control performed by the control system is different. Therefore, illustration of the control system is omitted as well, and as required, explanation is given by using the reference signs used in FIG. 7.

The phase modulator in the image forming apparatus according to the sixth embodiment can correct the write start position in the horizontal scanning direction by a write position-correcting phase shift value (write start position-correcting phase adjustment amount), and the magnification in the horizontal scanning direction by a magnification-correcting phase shift value (magnification-correcting phase adjustment amount in the horizontal scanning direction), respectively, as in the fourth embodiment explained with reference to FIG. 7 and FIG. 8.

In the sixth embodiment, a phase adjustment amount-determining unit (corresponding to the magnification correction controller 61' in FIG. 7) determines the magnitude correlation between a phase shift value (phase adjustment amount) and a set threshold, the phase shift value being obtained by adding up the write position-correcting phase shift value and the magnification-correcting phase shift value (similar to those explained in the fourth embodiment). Based on the determination result, until the phase adjustment amount exceeds the threshold, magnification correction of an image in the horizontal scanning direction is performed by phase modulation in which the write clock frequency is fixed, and after the phase adjustment amount exceeds the threshold, magnification correction of the image in the horizontal scanning direction is performed by frequency modulation, in which the write clock frequency is changed to an optimum value.

That it, when the routine in FIG. 9 is started, at the first step, the controller (the same microcomputer as the controller 50" in FIG. 7) of the image forming apparatus according to the sixth embodiment performs the same processing as at step S1' in FIG. 8, to set a write clock initial value, a write position-correcting phase shift initial value, and a magnification-correcting phase shift initial value, thereby making the optical scanner printable according to the set write clock initial value and phase shift initial values.

At steps S2 and S3, the controller performs the same processing as at steps S2 and S3 in FIG. 8, and at step S4', calculates the write position-correcting phase shift value in the horizontal scanning direction when the write clock frequency is fixed and the magnification-correcting phase shift value, from a mean value or the like of the measurement result of the time difference since the sensor 25 has detected the laser beam until the sensor 26 detects the laser beam, as in the fourth embodiment.

At step S5', the magnification correction controller 61' calculates a write clock value (frequency) and a magnification-correcting phase shift value when an optimum write clock frequency is set, from the mean value or the like of the measurement result of the time difference.

At next step S6", the controller determines whether the phase adjustment amount i.e., the total of the phase shift values is equal to or smaller than the set threshold, the phase adjustment amount being obtained by adding up the write position-correcting phase shift value and the magnification-correcting phase shift value when the write clock frequency is fixed, calculated at step S4', and stores the determination result (magnitude correlation) in the storage unit.

According to the determination, when the total of the phase shift values is equal to or smaller than the threshold, that is, when the total of the phase shift values does not exceed the threshold (YES), the same processing and determination as those in FIG. 8 are performed at step S7 and following steps, to perform magnification correction of an image by phase modulation, with the frequency fixed.

According to the determination at step S6", when the total of the phase shift values is larger than the threshold, that is, the total of the phase shift values exceeds the threshold, the same processing and determination as those in FIG. 8 are performed at step S10 and following steps, to perform magnification correction of the image by frequency modulation, in which magnification correction is performed by changing the frequency of an image signal to an optimum write clock frequency in the unit of a line or in the unit of a plurality of lines.

Thus, in the sixth embodiment, magnification correction of an image by phase modulation (fixed frequency) and magnification correction of the image by frequency modulation are changed over to each other according to whether the phase shift value, obtained by adding up the write position-correcting phase shift value and the magnification-correcting phase shift value when the write clock frequency is fixed, exceeds the preset threshold.

Therefore, as compared with the fourth embodiment explained with reference to FIG. 7 and FIG. 8, the phase adjustment amount (phase shift value) can be determined accurately. Accordingly, changeover to the magnification correction of the image by frequency modulation can be performed with high accuracy, thereby enabling accurate prevention of image degradation.

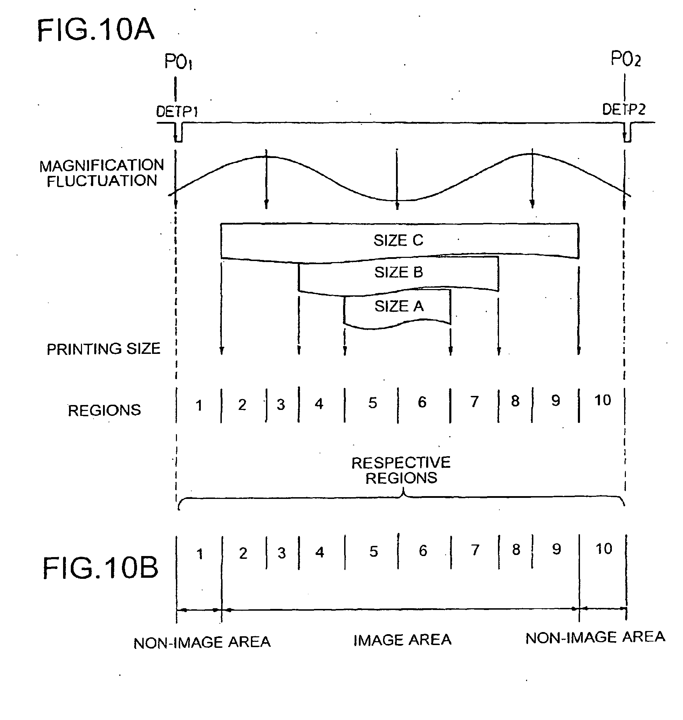

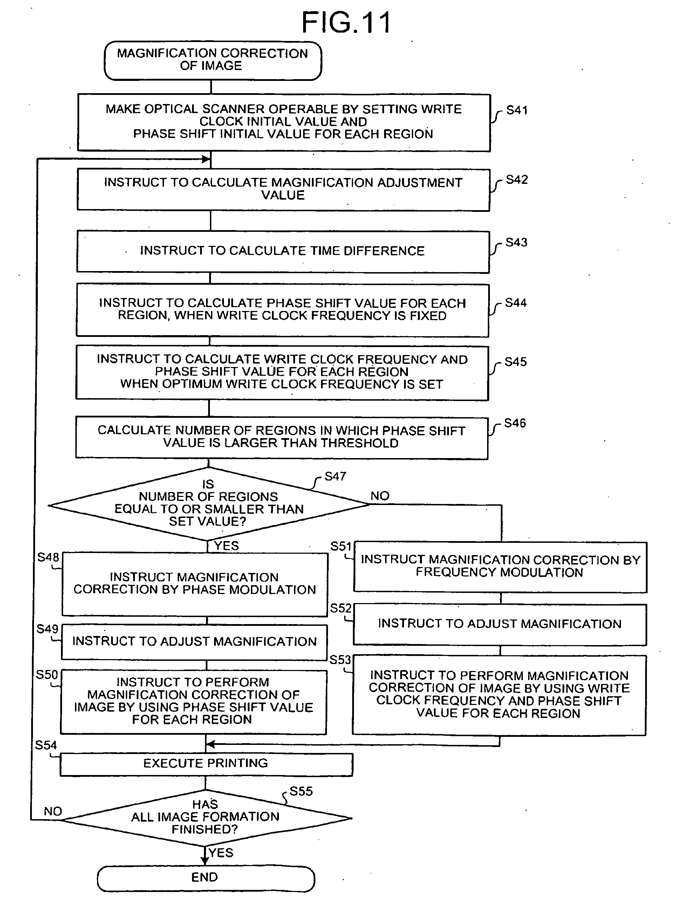

FIG. 10A and FIG. 10B are explanatory views of region dividing in the horizontal scanning direction performed by an image forming apparatus according to a seventh embodiment of the present invention; and FIG. 11 is a flowchart of a process procedure for a magnification correction of an image performed by a control system in the image forming apparatus according to the seventh embodiment.

The configuration of the image forming apparatus according to the seventh embodiment is the same as that in FIG. 2. Moreover, the control system is the same as that of the first embodiment explained with reference to FIG. 1 (or may be configured as shown in FIG. 5), and only the content of the control performed by the control system is different. Therefore, illustration of the control system is omitted as well, and as required, explanation is given by using the reference signs used in FIG. 1.

The image forming apparatus according to the seventh embodiment is different from that of the first embodiment in that the phase adjustment amount-determining unit (the magnification correction controller 61 in FIG. 1) determines the magnitude correlation between a phase adjustment amount in a predetermined region in the horizontal scanning direction calculated by the phase modulator (the phase controller 58b in FIG. 1) and a set threshold, and that, based on the determination result of the phase adjustment amount-determining unit, magnification correction of an image by the phase modulator is changed over to magnification correction of the image by the frequency modulator (the PLL transmitter 58a in FIG. 1).

In the seventh embodiment, predetermined regions in the horizontal scanning direction, that is, the whole region between detection positions PO₁ and PO₂ of the sensors 25 and 26 as shown in FIG. 10A (also see FIG. 1) is divided into a plurality of regions, for example, into ten (1 to 10) regions in the horizontal scanning direction, corresponding to the magnification fluctuation
characteristic of the fθ lens and the printing size width according to an assumed transfer paper size. The phase shift value for each divided region, that is, the phase shift value (phase adjustment amount), calculated by fixing the write clock frequency, is set for each region as shown in Table 1.

**Table 1**

| Region | Threshold | Phase shift value |
|---|---|---|
| 1 | I | I |
| 2 | II | II |
| 3 | III | III |
| 4 | IV | IV |
| 5 | V | V |
| 6 | VI | VI |
| 7 | VII | VII |
| 8 | VIII | VIII |
| 9 | IX | IX |
| 10 | X | X |

Further, the magnification correction controller 61 and the controller 50 (see FIG. 1) set the thresholds I to X corresponding to the respective regions as shown in Table 1, and calculate the phase shift values I to X and store these values.

Determination of the magnitude correlation between the phase shift value and the threshold is performed in the following manner.

At first, comparison is made between phase shift values I to X and corresponding thresholds I to X for each region of the divided first to the tenth regions. The regions are then divided into a region in which the phase shift value is equal to or smaller than the threshold, and a region in which the phase shift value is larger than the threshold. When the number of regions in which the phase shift value is larger than the threshold becomes equal to or larger than a preset number, magnification correction of an image is performed by frequency modulation in which the magnification correction is performed by changing the frequency of an image signal to an optimum write clock frequency in the unit of a line or in the unit of a plurality of lines.

In FIG. 10A and FIG. 10B, there is shown an example in which predetermined regions in the horizontal scanning direction indicate a plurality of divided regions having an unequal width, corresponding to the magnification fluctuation characteristic of the fθ lens and the printing size width according to an assumed transfer paper size. However, the respective regions to be divided may be divided into regions having an equal width.

The image forming apparatus according to the seventh embodiment starts the routine of magnification correction of an image shown in FIG. 11, at a predetermined timing.

At first step S41, the controller 50 sets a write clock frequency initial value (hereinafter, simply as write clock initial value) and a phase shift initial value in the magnification correction controller 61, at a predetermined timing such as after turning the power on or restarting after having stopped the machine. At this time, the phase shift value of the whole region between the detection positions PO₁ and PO₂ (also see FIG. 1) is not set, but a phase shift initial value (phase adjustment amount) is set for each divided region.

The optical scanner is made printable corresponding to the set write clock initial value and phase shift initial value.

At next step S42, the same processing as explained at step S2 in FIG. 3 is performed, to issue an instruction to calculate a magnification adjustment value. At step S43, the same processing as explained at step S3 in FIG. 3 is performed, to perform measurement of the time difference since the sensor 25 has detected the laser beam until the sensor 26 detects the laser beam for a specified number of times, so that a mean value or the like of the measurement result is calculated.

At step S44, a phase shift value (phase adjustment amount) is calculated for each region when the write clock frequency is fixed, from the mean value or the like of the measurement result of the time difference.

At step S45, substantially at the same timing as at step S44 in parallel, a write clock frequency (write clock value) when an optimum write clock frequency is set is calculated from the mean value or the like of the measurement result of the time difference. Further, a phase shift value (phase adjustment amount) for each region when the frequency is changed to the optimum write clock frequency is calculated.

At step S46, the phase shift value (a value calculated by fixing the write clock frequency) is compared with each of the thresholds I to X (see Table 1) corresponding thereto for each region, to calculate the number of regions in which the phase shift value is larger than the threshold.

At step S47, it is determined whether the number of regions in which the phase shift value is larger than the threshold is equal to or smaller than a preset value, and if the number is equal to or smaller than the preset value (YES), control proceeds to steps S48 and S49, to transmit a determination result such that magnification correction of an image is to be executed by phase modulation that can perform magnification correction of the image without expanding the interval between sheets even during continuous printing, as in the processing explained at steps S7 and S8 in FIG. 3, to issue a magnification adjustment instruction.

At step S50, the controller 50 issues an instruction for performing magnification correction of an image with the respective phase shift values when the write clock frequency is fixed, calculated for respective regions. Accordingly, magnification correction of the image is performed by changing the cycle time of an optional pixel in the unit of pixel.

According to the determination at step S47, when control proceeds to step S51 since the number of regions in which the phase shift value is larger than the threshold exceeds the preset value, the same processing as explained at steps S10 and S11 in FIG. 3 is performed at steps S51 and S52 to transmit a determination result such that magnification correction of an image is to be executed by frequency modulation in which magnification correction of the image is performed by changing the write clock frequency (frequency of an image signal) in the unit of a line or in the unit of a plurality of lines, to issue a magnification adjustment instruction.

At step S53, the controller 50 issues an instruction for performing magnification correction of an image based on the optimum write clock frequency and the phase shift value for each region calculated at step S45. As a result, the magnification correction of an image is performed by frequency modulation, in which the frequency of an image signal is changed in the unit of a line or in the unit of a plurality of lines.

The processing and determination as those explained at step S13 and following steps in FIG. 3 are then performed at step S54 and following steps, and when the set all image formation has finished, the processing in this routine is finished.

FIG. 11 indicates an example in which the phase shift value for each region when the write clock frequency is fixed, and the phase shift value for each region when an optimum write clock frequency is set are respectively calculated, before determining whether the number of regions in which the phase shift value is larger than the threshold is equal to or smaller than the preset value. However, the calculation of the phase shift value for each region when the optimum write clock frequency is set is not performed at step S45 in FIG. 11, but the processing at step S45 may be performed at steps prior to step S51 and only when the number of regions in which the phase shift value is larger than the threshold exceeds the preset value (NO as determination result) in the determination at step S47.

The comparison between the phase shift value and the threshold may be performed in such a manner that, as shown in Table 2, a threshold obtained by unifying a plurality of divided regions is provided, which is then compared with a phase shift value obtained in the above manner. For example, even when the phase shift value is set for each region of from the first to the tenth regions, as in the example shown in Table 2, the respective regions are unified into a group (region) of from the second to the fourth regions, a group (region) of from the fifth to the sixth regions, and a group (region) of from the seventh to the ninth regions, and total values II, III, and IV of the phase shift values are respectively set corresponding to the groups, and these can be compared with the respective thresholds II, III, and IV.

Each group (region) is obtained by unifying a plurality of regions, and the number of groups in which the phase shift value exceeds the corresponding threshold is calculated. When the number exceeds a preset value, magnification correction of an image is performed by frequency modulation, which is performed by changing the write clock frequency.

In this case, the magnification correction controller 61 (or the controller 50' when applied to FIG. 5) has a function of calculating a phase shift value for each group shown in Table 2, and storing the calculation result. Further, the magnification correction controller 61 also includes a storage unit in which a threshold for each group can be set.

The way to unify the first to the tenth regions into a plurality of groups (regions) is not limited to the one shown in Table 2.

**Table 2**

| Region | Threshold | Phase shift value |
|---|---|---|
| 1 | I | I |
| 2 | II | II |
| 3 | | |
| 4 | | |
| 5 | III | III |
| 6 | | |
| 7 | IV | IV |
| 8 | | |
| 9 | | |
| 10 | V | V |

The predetermined regions in the horizontal scanning direction obtained by dividing the whole region in the horizontal scanning direction can be positioned in a horizontal-scanning image area, as the second to the ninth regions shown in FIG. 10B. The phase shift value (phase adjustment amount) in the image area can be then monitored, and hence, image degradation in the image area can be prevented.

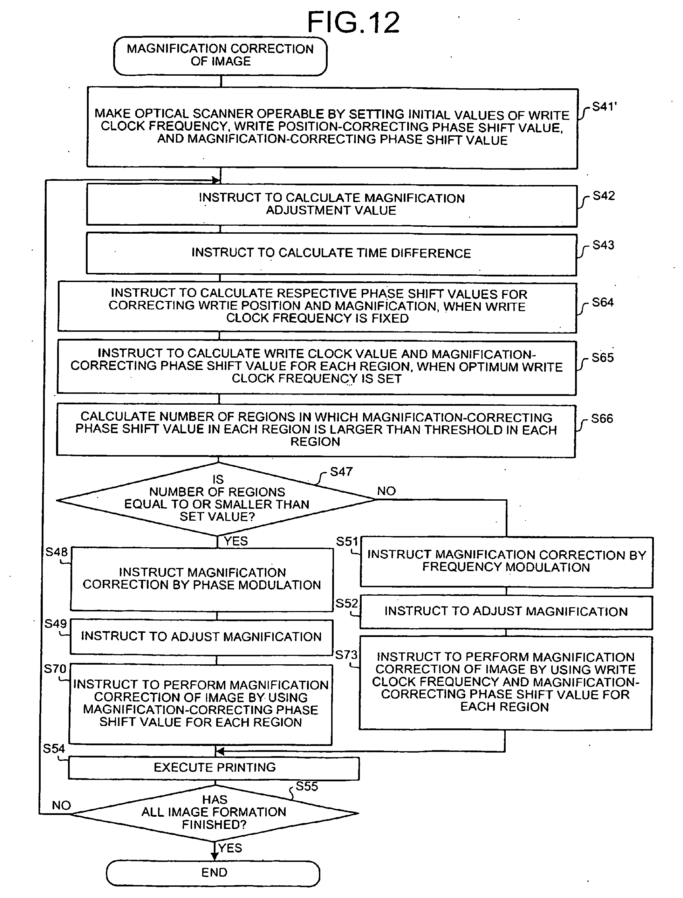

FIG. 12 is a flowchart of a process procedure for a magnification correction of an image performed by a control system in an image forming apparatus according to an eighth embodiment of the present invention. For the brevity of explanation, in FIG. 12, the steps that are similar to those shown in FIG. 11 have been designated with like step numbers.

The configuration of the image forming apparatus according to the eight embodiment is the same as that in FIG. 2. Moreover, the control system is also the same as that of the fourth embodiment explained with reference to FIG. 7 (or may be configured as shown in FIG. 5), and only the content of the control performed by the control system is different. Therefore, illustration of the control system is omitted as well, and as required, explanation is given by using the reference signs used in FIG. 7.

In the same manner as the fourth embodiment, with reference to FIG. 7 and FIG. 8, the phase modulator in the image forming apparatus according to the eighth embodiment can respectively correct the write start position in the horizontal scanning direction by a write position-correcting phase shift value (write start position-correcting phase adjustment amount) by the phase modulation, and magnification in the horizontal scanning direction by a magnification-correcting phase shift value (magnification-correcting phase adjustment amount in the horizontal scanning direction) by phase modulation. The phase adjustment amount-determining unit (the magnification correction controller 61' in FIG. 7) determines the magnitude correlation between the magnification-correcting phase shift value in a predetermined region in the horizontal scanning direction and a set threshold.

When the routine in FIG. 12 is started, at first step S41', the controller (a microcomputer similar to the controller 50" in FIG. 7) of the image forming apparatus according to the eighth embodiment performs the same processing as at step S1' in FIG. 8, and at next steps S42 and S43, performs the processing in FIG. 11.

At next step S64, a magnification-correcting phase shift value and a write position-correcting phase shift value for each region (each predetermined region in 1 to 10 regions shown in FIG. 10A and FIG. 10B in the horizontal scanning direction) when the write clock frequency is fixed are calculated (see Table 3).

At step S65, substantially at the same timing as at step S64 in parallel, a write clock frequency (write clock value) when an optimum write clock frequency is set is calculated. Further, a magnification-correcting phase shift value for each region when the optimum write clock frequency is set is calculated.

**Table 3**

| Region | Threshold | Write position-correcting phase shift value | Magnification-correcting phase shift value |
|---|---|---|---|
| 1 | I | I | I |
| 2 | II | II | II |
| 3 | III | III | III |
| 4 | IV | IV | IV |
| 5 | V | V | V |
| 6 | VI | VI | VI |
| 7 | VII | VII | VII |
| 8 | VIII | VIII | VIII |
| 9 | IX | IX | IX |
| 10 | X | X | X |

At next step S66, the magnification-correcting phase shift value (a value calculated by fixing the write clock frequency) for each region is compared with each of the thresholds I to X corresponding thereto for each region (see Table 3), to calculate the number of regions in which the magnification-correcting phase shift value in each region is larger than the threshold for that region.

At step S47, it is determined whether the number of regions calculated is equal to or smaller than a preset value, and if it is equal to or smaller than the preset value (YES), control proceeds to steps S48 and S49, to transmit a determination result such that magnification correction of an image is to be executed by phase modulation that can perform magnification correction of the image without expanding the interval between sheets even during continuous printing, as in the processing explained at steps S7 and S8 in FIG. 3, to issue a magnification adjustment instruction.

At step S70, the controller 50" issues an instruction for performing magnification correction of an image with the respective magnification-correcting phase shift values when the write clock frequency is fixed, calculated for respective regions. Accordingly, magnification correction of the image is performed by changing the cycle time of an optional pixel in the unit of pixel.

According to the determination at step S47, when control proceeds to step S51 since the number of regions in which the phase shift value is larger than the threshold exceeds the preset value, the same processing as explained at steps S10 and S11 in FIG. 3 is performed at steps S51 and S52, to transmit a determination result such that magnification correction of an image is to be executed by frequency modulation in which magnification correction of the image is performed by changing the write clock frequency (frequency of an image signal) in the unit of a line or in the unit of a plurality of lines, to issue a magnification adjustment instruction.

At step S73, the controller 50" issues an instruction for performing magnification correction of an image based on the optimum write clock frequency and the magnification-correcting phase shift value for each region calculated at step S65. Accordingly, the magnification correction of the image is performed by frequency modulation, in which the frequency of an image signal is changed in the unit of a line or in the unit of a plurality of lines.

Thereafter, the processing and determination as those explained at step S54 and following steps in FIG. 11 are performed, and when the set all image formation has finished, the processing in this routine is finished.

FIG. 12 indicates an example in which the magnification-correcting phase shift value and the write position-correcting phase shift value for each region when the write clock frequency is fixed, and the phase shift value for each region when an optimum write clock frequency is set are respectively calculated, before determining whether the number of regions in which the magnification-correcting phase shift value for each region is larger than the threshold for each region is equal to or smaller than the preset value. However, the calculation of the phase shift value for each region when the optimum write clock frequency is set is not performed at step S65 in FIG. 12, but can be performed at steps prior to step S51 and when the number of regions, in which the phase shift value is larger than the threshold, exceeds the preset value (NO) in the determination at step S47.

According to the eighth embodiment, determination to change over the magnification correction of an image from the one by phase modulation to the one by frequency modulation is performed by comparing only the magnification-correcting phase shift value with the threshold, and the write position-correcting phase shift value is not used because it has little influence on image degradation in the image area. Accordingly, the content of the control can be simplified.

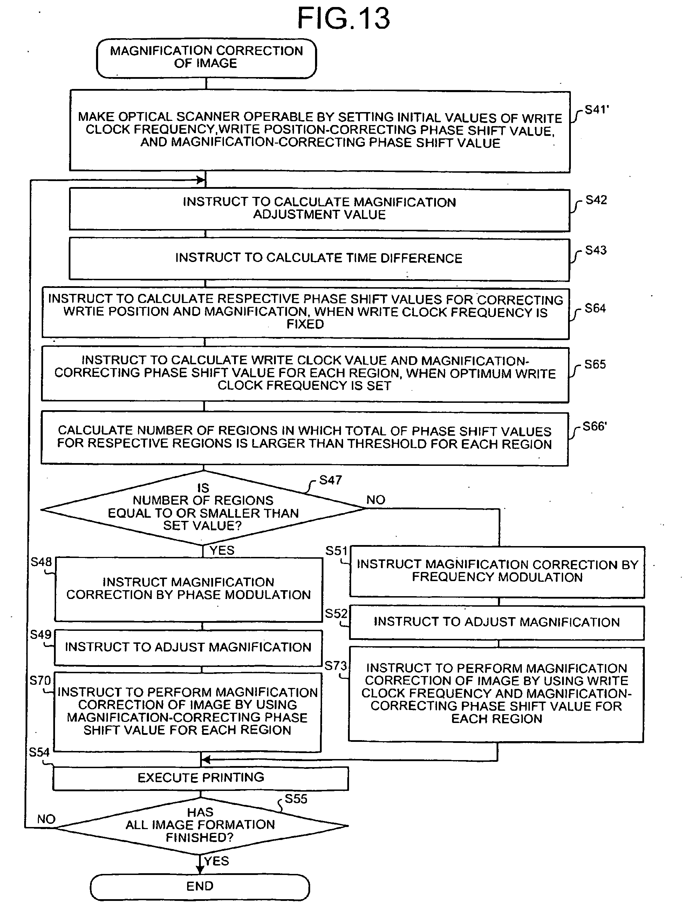

FIG. 13 is a flowchart of a process procedure for a magnification correction of an image performed by a control system in an image forming apparatus according to a ninth embodiment of the present invention. For the brevity of explanation, in FIG. 13, the steps that are similar to those shown in FIG. 12 have been designated with like step numbers.

The configuration of the image forming apparatus according to the ninth embodiment is the same as that in FIG. 2. Moreover, the control system is the same as that of the fourth embodiment explained with reference to FIG. 7 (or may be configured as shown in FIG. 5), and only the content of the control performed by the control system is different.

The phase modulator in the image forming apparatus according to the ninth embodiment is different from that of the eighth embodiment shown in FIG. 12 only in the following aspect. That is, the phase adjustment amount-determining unit determines the magnitude correlation between a phase adjustment amount, obtained by adding up a write position-correcting phase shift value (write start position phase adjustment amount) and a magnification-correcting phase shift value (magnification phase adjustment amount in the horizontal scanning direction) in a predetermined region in the horizontal scanning direction, and a set threshold.

When the routine in FIG. 13 is started, at first step S41', the controller (a microcomputer similar to the controller 50" in FIG. 7) of the image forming apparatus according to the ninth embodiment performs the same processing as at step S1' in FIG. 8, and thereafter, the same processing at steps S42, S43, S64, and S65 in FIG. 12 is performed.

At step S66', the phase shift value (phase adjustment amount), obtained by adding up the write position-correcting phase shift value and the magnification-correcting phase shift value (a value calculated with the write clock frequency being fixed) calculated for each of 1 to 10 regions shown in Table 3, is compared with each of corresponding thresholds I to X for respective regions, and the number of regions, in which the total of the phase shift values in each region is larger than the threshold in the relevant region, is calculated.

Thereafter, the determination and processing at step S47 and following steps in FIG. 12 are performed. That is, if the number of regions, in which the total of the phase shift values in each region is larger than the threshold in the relevant region, is equal to or smaller than a preset value, then magnification correction of an image is executed by phase modulation that can perform magnification correction of the image without expanding the interval between sheets even during continuous printing.

If the number of regions, in which the total of the phase shift values in each region is larger than the threshold in the relevant region, exceeds the preset value, then magnification correction of the image is executed by frequency modulation, in which magnification correction of the image is performed by changing the write clock frequency (frequency of an image signal) in the unit of a line or in the unit of a plurality of lines.

The processing at step S65 in FIG. 13 may be performed between step S47 and step S51, rather than being performed immediately after step S64.

According to the ninth embodiment, determination to change over magnification correction of an image from the one by phase modulation to the one by frequency modulation is performed by comparing the phase shift value obtained by adding up the write position-correcting phase shift value and the magnification-correcting phase shift value with the threshold, and hence, the phase shift amount in a region in which it is desired to prevent image degradation can be accurately obtained.

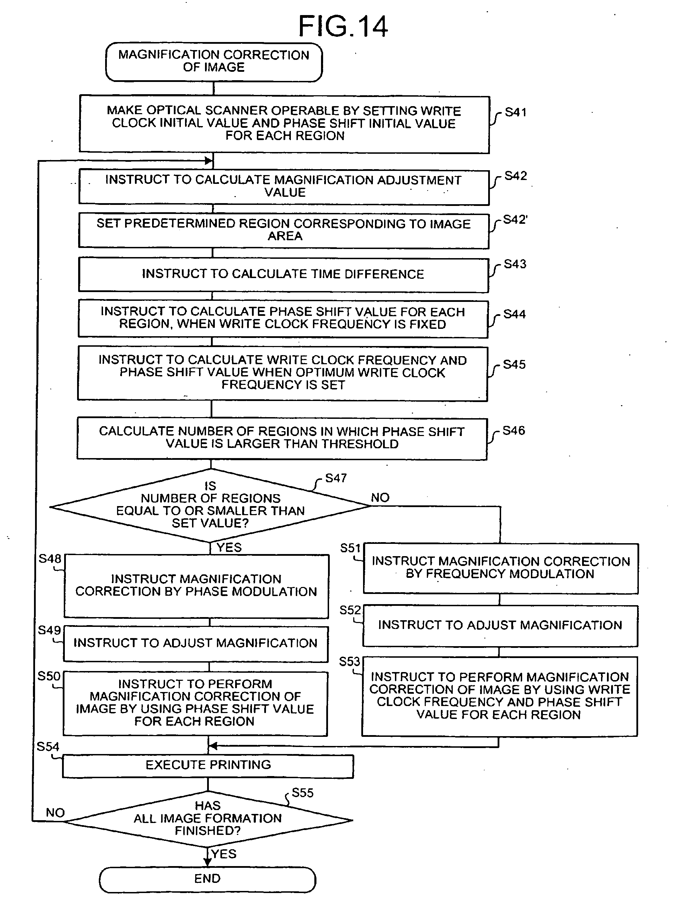

FIG. 14 is a flowchart of a process procedure for a magnification correction of an image performed by a control system of an image forming apparatus according to a tenth embodiment of the present invention. For the brevity of explanation, in FIG. 14, the steps that are similar to those shown in FIG. 11 have been designated with like step numbers.

The configuration of the image forming apparatus according to the tenth embodiment is the same as that in FIG. 2, and hence, the illustration thereof is omitted. The control system is also the same as that of the fourth embodiment explained with reference to FIG. 7 (or may be configured as shown in FIG. 5), and only the content of the control performed by the control system is different.

The image forming apparatus according to the tenth embodiment is different from that of the seventh embodiment explained with reference to FIGs. 10A, 10B, and 11 in that a predetermined region-changing unit (the controller functions as this unit like the controller 50" in FIG. 7) that changes a predetermined region in the horizontal scanning direction corresponding to an image area in the horizontal scanning direction is provided.

For example, in each of 1 to 10 regions shown in FIGs. 10A and 10B, the predetermined region in the horizontal scanning direction is changed corresponding to an image area in which image formation is performed.

That is, the image forming apparatus according to the tenth embodiment starts the routine for a magnification correction of an image shown in FIG. 14 at a predetermined timing.

The processing at steps S41 and S42 in FIG. 11 is then performed, and at the next step S42', setting is performed by changing the predetermined regions in the horizontal scanning direction corresponding to the image area. For example, as shown in Table 4, predetermined regions (see FIGs. 10A and 10B for ten regions) in the horizontal scanning direction are changed corresponding to five image areas A to E divided according to imaging sizes in the horizontal scanning direction in which image formation is performed.

In Table 4, an example in which the image area is divided according to the imaging sizes by length is shown, but the image area can be divided by time or by the number of pixels.

After the predetermined regions are set, the same processing and determination as those at step S43 and following steps in FIG. 11 are performed. Accordingly, the predetermined regions in the horizontal scanning direction selected corresponding to the image area in Table 4 (in this example, a plurality of selected regions of from the first to the tenth regions, but it can be one region) are compared with corresponding respective thresholds in Table 1. When the number of the regions in which the phase shift value is larger than the threshold is equal to or smaller than the preset value, magnification correction of an image is executed by phase modulation that can perform magnification correction of the image without expanding the interval between sheets even during continuous printing.

When the number of the regions exceeds the preset value, magnification correction of the image is executed by frequency modulation, in which magnification correction of the image is performed by changing the write clock frequency (frequency of an image signal) in the unit of a line or in the unit of a plurality of lines.

According to the tenth embodiment, since the predetermined regions in the horizontal scanning direction to be monitored can be optimized according to the image area (imaging range), it can be avoided that a phase shift value in an unnecessary region is calculated and that the frequency is changed according to the phase shift value in the unnecessary region. Accordingly, the timing at which the magnification correction of the image is performed by frequency modulation can be accurately controlled, thereby improving the print speed (the number of image formations per unit time).

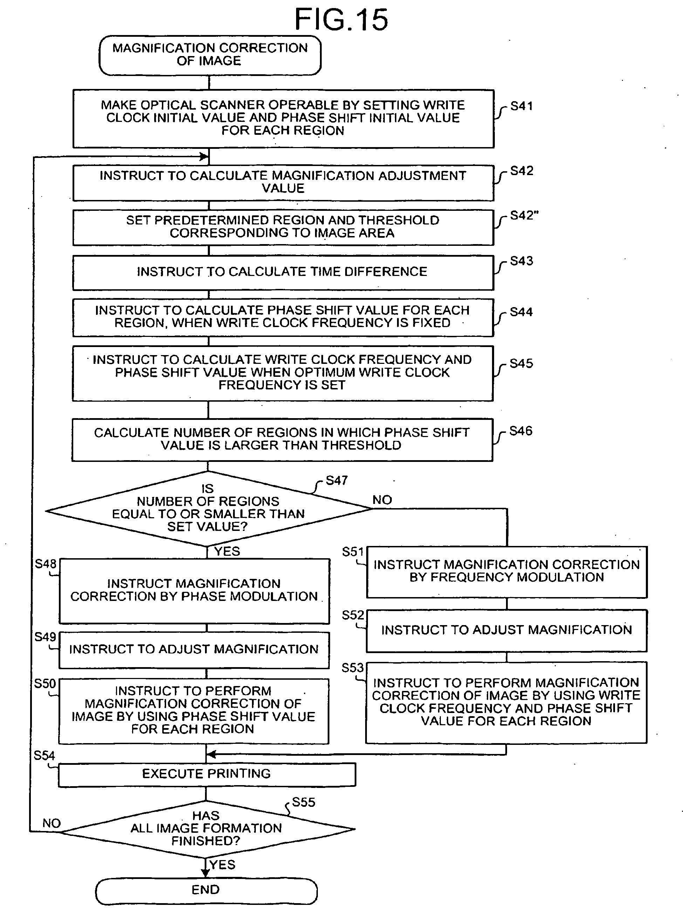

FIG. 15 is a flowchart of a process procedure for a magnification correction of an image performed by a control system in an image forming apparatus according to an eleventh embodiment of the present invention. For the brevity of explanation, in FIG. 15, the steps that are similar to those shown in FIG. 14 have been designated with like step numbers.

The configuration of the image forming apparatus according to the eleventh embodiment is the same as that in FIG. 2. Moreover, the control system is the same as that of the fourth embodiment explained with reference to FIG. 7 (or may be configured as shown in FIG. 5), and only the content of the control performed by the control system is different.

The image forming apparatus according to the eleventh embodiment is different from that of the tenth embodiment in that a threshold-changing unit that changes the threshold is provided. A controller having the same configuration as that of the controller 50" in FIG. 7 functions as the threshold-changing unit. However, since only the content of the control performed by the controller is different from that of the controller 50", the illustration thereof is omitted. In the eleventh embodiment, the threshold is changed according to the image area in which image formation is performed.

That is, in the eleventh embodiment, when the routine for a magnification correction of an image shown in FIG. 15 is started at a predetermined timing, the processing at steps S41 and S42 in FIG. 14 is performed, and at the next step S42", setting is performed by changing the predetermined region in the horizontal scanning direction according to an image area (imaging size) in which the image formation is to be performed, and the threshold is also set according to the image area.

For example, as shown in Table 4, predetermined regions (see FIGs. 10A and 10B for ten regions) in the horizontal scanning direction are changed according to the image areas A to E in the horizontal scanning direction, and the thresholds corresponding to the image areas A to E are set as shown in Table 5.

Thereafter, the same processing and determination as those at step S43 and following steps in FIG. 14 are performed. The predetermined region in the horizontal scanning direction selected corresponding to an image area in Table 5 (respective selected regions of from the first to the tenth regions) is compared with each corresponding threshold. When the number of regions in which the phase shift value is larger than the threshold is equal to or smaller than a preset value, magnification correction of an image is executed by phase modulation that can perform magnification correction of the image without expanding the interval between sheets even during continuous printing.

**Table 4**

| Image area | Imaging size in the horizontal scanning direction | Predetermined region |
|---|---|---|
| A | <120 | 5, 6 |
| B | 120=, <150 | 4, 5, 6, 7 |
| C | 150=, <210 | 3, 4, 5, 6, 7, 8 |
| D | 210=, <270 | 2, 3, 4, 5, 6, 7, 8, 9 |
| E | 270= | 1, 2, 3, 4, 5, 6, 7, 8, 9, 10 |

**Table 5**

| Region | Threshold | | | | | Phase shift |
|---|---|---|---|---|---|---|
| | A | B | C | D | E | |
| 1 | A I | B I | C I | D I | E I | I |
| 2 | A II | B II | C II | D II | E II | II |
| 3 | A III | B III | C III | D III | E III | III |
| 4 | A IV | B IV | C IV | D IV | E IV | IV |
| 5 | A V | B V | C V | D V | E V | V |
| 6 | A VI | B VI | C VI | D VI | E VI | VI |
| 7 | A VII | B VII | C VII | D VII | E VII | VII |
| 8 | A VIII | B | C | D | E | VIII |
| | | VIII | VIII | VIII | VIII | |
| 9 | A IX | B IX | C IX | D IX | E IX | IX |
| 10 | A X | B X | C X | D X | E X | X |

When the number of the regions exceeds the preset value, magnification correction of the image is executed by frequency modulation, in which magnification correction of the image is performed by changing the write clock frequency (frequency of an image signal) in the unit of a line or in the unit of a plurality of lines.

According to the eleventh embodiment, since an optimum monitoring region and an optimum threshold can be selected according to the image area (imaging range), the timing of shifting to the magnification correction of an image by frequency modulation can be accurately controlled. Accordingly, the print speed (the number of image formations per unit time) can be improved.

Five image areas A to E shown in Table 5 correspond to the predetermined regions in the horizontal scanning direction (respective selected regions of from the first to the tenth regions) as shown in Table 4, but as shown in Table 6, the imaging size in the horizontal scanning direction can be divided into new divided areas i to iii, and thresholds can be provided, as shown in Table 7, corresponding to the respective areas i to iii.

**Table 6**

| Imaging size in the horizontal scanning direction | Divided areas |
|---|---|
| <130 | i |
| 130=, <250 | ii |
| 250= | iii |

**Table 7**

| Region | Threshold | | | Phase shift |
|---|---|---|---|---|
| | i | ii | iii | |
| 1 | i I | ii I | iii I | I |
| 2 | i II | ii II | iii II | II |
| 3 | i III | ii III | iii III | III |
| 4 | i IV | ii IV | iii IV | IV |
| 5 | i V | ii V | iii V | V |
| 6 | i VI | ii VI | iii VI | VI |
| 7 | i VII | ii VII | iii VII | VII |
| 8 | i VIII | ii VIII | iii VIII | VIII |
| 9 | i IX | ii IX | iii IX | IX |
| 10 | i X | ii X | iii X | X |

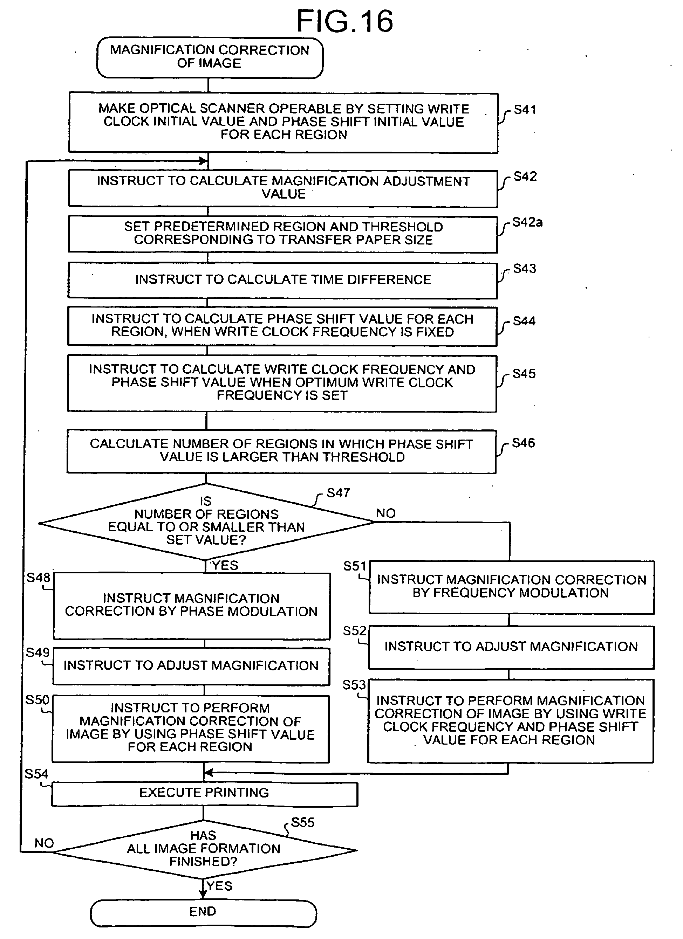

FIG. 16 is a flowchart of a process procedure for a magnification correction of an image performed by a control system in an image forming apparatus according to a twelfth embodiment of the present invention. For the brevity of explanation, in FIG. 16, the steps that are similar to those shown in FIG. 15 have been designated with like step numbers.

The configuration of the image forming apparatus according to the twelfth embodiment is the same as that in FIG. 2. Moreover, the control system is the same as that of the fourth embodiment explained with reference to FIG. 7 (or may be configured as shown in FIG. 5), and only the content of the control performed by the control system is different.

The image forming apparatus according to the twelfth embodiment is different from that of the eleventh embodiment in that a threshold-changing unit (a controller having the same configuration as that of the controller 50" in FIG. 7 functions as this unit) that changes the threshold corresponding to a transfer paper size is provided.

When the routine for a magnification correction of an image shown in FIG. 16 is started at a predetermined timing, the image forming apparatus performs the processing at steps S41 and S42 in FIG. 15, and at the next step S42a, the image forming apparatus changes the predetermined region in the horizontal scanning direction according to a transfer paper size selected, and sets the threshold corresponding to an image area determined corresponding to the transfer paper size.

For example, since the image areas A to E shown in Table 5 respectively correspond to transfer paper sizes as shown in Table 8, a threshold corresponding to the selected transfer paper size is selected and set by using the Table 5.

**Table 8**

| Image area | Transfer paper size | Predetermined region |
|---|---|---|
| A | Business card | 5, 6 |
| B | A6 vertical | 4, 5, 6, 7 |
| C | A6 horizontal, A5 vertical | 3, 4, 5, 6, 7, 8 |
| D | A5 horizontal, A4 vertical | 2, 3, 4, 5, 6, 7, 8, 9 |
| E | A4 horizontal, A3 vertical | 1, 2, 3, 4, 5, 6, 7, 8, 9, 10 |

Thereafter, the same processing and determination as those at step S43 and following steps in FIG. 15 are performed. A predetermined region (respective selected regions of from the first to the tenth regions) in the horizontal scanning direction selected corresponding to the image area in Table 5 is then compared with corresponding respective thresholds. When the number of regions in which the phase shift value is larger than the threshold is equal to or smaller than a preset value, magnification correction of an image is executed by phase modulation that can perform magnification correction of the image without expanding the interval between sheets even during continuous printing.

When the number of the regions exceeds the preset value, magnification correction of the image is executed by frequency modulation, in which magnification correction of the image is performed by changing the write clock frequency (frequency of an image signal) in the unit of a line or in the unit of a plurality of lines.

According to the twelfth embodiment, a region in which it is desired to prevent image degradation can be changed corresponding to the transfer paper size.

Thus, in the eleventh embodiment, an example in which the threshold changed by the threshold-changing unit is changed according to the image area in which the image formation is performed has been explained. In the twelfth embodiment, an example in which the threshold changed by the threshold-changing unit is changed according to the transfer paper size to be used has been explained. However, the threshold can be changed according to cumulative time of the image forming operation, the number of image formations, or the temperature in the image forming apparatus.

Accordingly, an optimum threshold agreeing with the use condition can be set, and hence, the shift from the magnification correction of an image by phase modulation to the magnification correction of the image by frequency modulation can be executed at optimum timing.

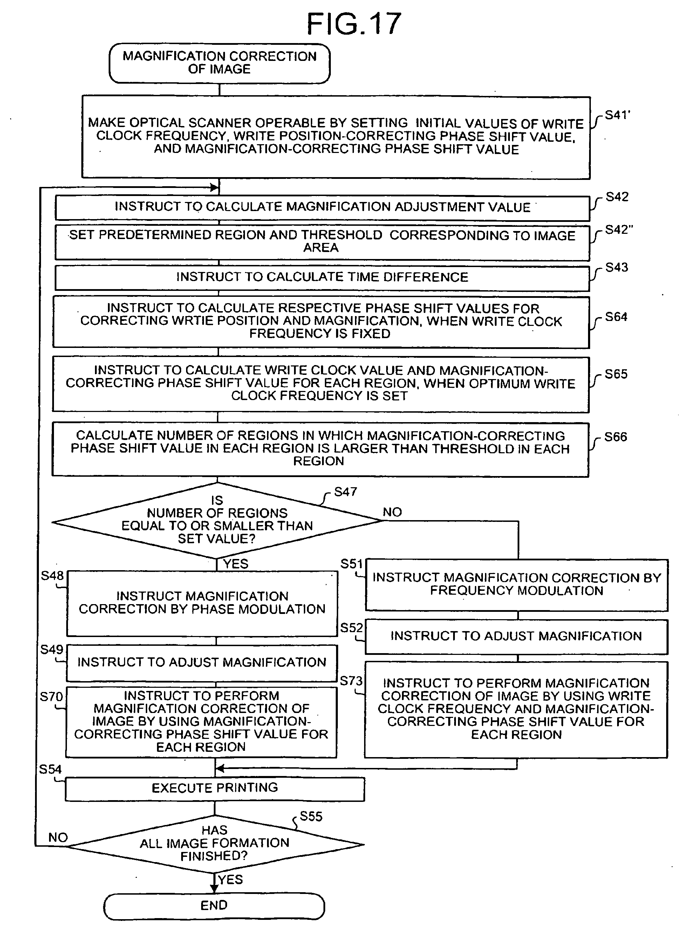

FIG. 17 is a flowchart of a process procedure for a magnification correction of an image performed by a control system in an image forming apparatus according to a thirteenth embodiment of the present invention. For the brevity of explanation, in FIG. 17, the steps that are similar to those shown in FIGS. 12 and 15 have been designated with like step numbers.

The configuration of the image forming apparatus according to the thirteenth embodiment is the same as that in FIG. 2. Moreover, the control system is the same as that of the fourth embodiment explained with reference to FIG. 7 (or may be configured as shown in FIG. 5), and only the content of the control performed by the control system is different.

The phase modulator (though not shown, a phase controller similar to the phase controller 58b in FIG. 7 functions as the phase modulator) in the image forming apparatus according to the thirteenth embodiment can respectively correct the write start position in the horizontal scanning direction by a write start position-correcting phase adjustment amount by phase modulation, and magnification in the horizontal scanning direction by a magnification-correcting phase adjustment amount in the horizontal scanning direction by phase modulation. The phase adjustment amount-determining unit (though not shown, a magnification correction controller similar to the magnification correction controller 61 in FIG. 7 functions as this unit) determines the magnitude correlation between the magnification-correcting phase adjustment amount in a predetermined region in the horizontal scanning direction (ten regions shown in FIGs. 10A and 10B) and a set threshold.

The predetermined region in the horizontal scanning direction (In FIG. 17, due to the limitation of space, described as the predetermined region) and the threshold are changed corresponding to the image area as in the eleventh embodiment.

In the thirteenth embodiment, when the routine for a magnification correction of an image shown in FIG. 17 is started at a predetermined timing, the controller performs the processing at steps S41' and S42 in FIG. 12, and thereafter at step S42", performs the same processing as that in FIG. 15, to set a predetermined region in the horizontal scanning direction corresponding to an image area (imaging size) as well as a threshold corresponding to the image area.

Thereafter, the controller performs the processing and determination at step S43 and following steps in FIG. 12. Accordingly, comparison is made between the magnification-correcting phase shift value (a value calculated with the write clock frequency being fixed) in the predetermined region (a region selected from 1 to 10 regions shown in Table 5) set corresponding to the image area and the threshold set corresponding to the image area, to calculate the number of regions in which the magnification-correcting phase shift value in each region is larger than the threshold in the region.

When the number of regions calculated is equal to or smaller than the preset value, magnification correction of an image is executed by phase modulation that can perform magnification correction of the image without expanding the interval between sheets even during continuous printing. When the number of the regions exceeds the preset value, magnification correction of the image is executed by frequency modulation, in which magnification correction of the image is performed by changing the write clock frequency (frequency of an image signal) in the unit of a line or in the unit of a plurality of lines.

According to the thirteenth embodiment, the phase shift amount (phase adjustment amount) in the predetermined region in the horizontal scanning direction set corresponding to the image area becomes an accurate phase shift amount without being affected by the correction of the write start position, and this amount is compared with an optimum threshold set corresponding to the image area, to control the changeover timing to the magnification correction of an image by the frequency modulation. Accordingly, the magnification correction of the image can be changed over to the frequency modulation at accurate timing, thereby further improving the print speed (the number of image formations per unit time).

The invention is defined by the following claims.

## Claims

1. An image forming apparatus comprising:
a deflector (32) configured to deflect optical beams modulated according to an image signal to thereby scan a surface of an image carrier (11) in a horizontal scanning direction to form an image on the image carrier (11);
optical beam detectors (25, 26) arranged on both sides of the image carrier (11) along the horizontal scanning direction, wherein the optical beam detectors (25, 26) are configured to detect an optical beam deflected by the deflector (32);
a time difference measuring unit (57) configured to measure a time difference between detections of the optical beams by optical beam detectors (25, 26); and
a magnification correcting unit (61) configured to correct, based on the time difference, a magnification in the horizontal scanning direction of the image on the image carrier (11), wherein the magnification correcting unit (61) includes
a frequency modulator (58a) configured to perform magnification correction of the image by changing a frequency of the image signal in units of a line or lines;
a phase modulator (58b) configured to perform magnification correction of the image by fixing the frequency and changing a cycle time of an optional pixel in units of pixel; and
a phase adjustment amount-determining unit (61) configured to determine whether a phase adjustment amount calculated by the phase modulator (58b) exceeds a threshold, wherein
the phase modulator (58b) is configured to perform the magnification correction of the image until the phase adjustment amount-determining unit (61) determines that the phase adjustment amount exceeds the threshold, and the frequency modulator (58a) is configured to perform the magnification correction after it is determined that the phase adjustment amount exceeds the threshold.

2. The image forming apparatus according to claim 1, wherein
the phase modulator (58b) is configured to correct a write start position in the horizontal scanning direction by a write start position-correcting phase adjustment amount, and to correct a magnification in the horizontal scanning direction by a magnification-correcting phase adjustment amount in the horizontal scanning direction, and
the phase adjustment amount-determining unit (61) is configured to determine whether the magnification-correcting phase adjustment amount in the horizontal scanning direction exceeds a threshold.

3. The image forming apparatus according to claim 1, wherein
the phase modulator (58b) is configured to correct a write start position in the horizontal scanning direction by a write start position-correcting phase adjustment amount, and to correct a magnification in the horizontal scanning direction by a magnification-correcting phase adjustment amount in the horizontal scanning direction, and
the phase adjustment amount-determining unit (61) is configured to determine whether a phase adjustment amount exceeds a threshold, the phase adjustment amount being obtained by adding up the write start position-correcting phase adjustment amount and the magnification-correcting phase adjustment amount in the horizontal scanning direction.

4. The image forming apparatus according to claim 1, further comprising:
a specified region-changing unit (50', 50") that changes the threshold based on a type of the image.

5. The image forming apparatus according to claim 1, wherein:
the phase adjustment amount-determining unit (61) is further configured to determine whether a phase adjustment amount in a predetermined region in the horizontal scanning direction calculated by the phase modulator (58b) exceeds a threshold;
the image forming apparatus further comprises:
a predetermined region-changing unit (50', 50") configured to change the predetermined region corresponding to an image area in the horizontal scanning direction, wherein the magnification correction of the image by the phase modulator (58b) is switched over to the magnification correction of the image by the frequency modulator (58a) based on a determination result of the phase adjustment amount-determining unit (61).

6. The image forming apparatus according to claim 5, further comprising a threshold-changing unit (50") configured to change the threshold.

7. The image forming apparatus according to claim 6, wherein the threshold-changing unit (50") is configured to change the threshold depending on a size of a transfer paper.

8. The image forming apparatus according to claim 5, wherein
the phase modulator (58b) is configured to correct a write start position in the horizontal scanning direction by a write start position-correcting phase adjustment amount, and to correct a magnification in the horizontal scanning direction by a magnification-correcting phase adjustment amount in the horizontal scanning direction, and
the phase adjustment amount-determining unit (61) is configured to determine whether the magnification-correcting phase adjustment amount in the horizontal scanning direction in the predetermined region exceeds a threshold.

9. The image forming apparatus according to claim 5, wherein
the phase modulator (58b) is configured to correct a write start position in the horizontal scanning direction by a write start position-correcting phase adjustment amount, and to correct a magnification in the horizontal scanning direction by a magnification-correcting phase adjustment amount in the horizontal scanning direction, and
the phase adjustment amount-determining unit (61) is configured to determine whether a phase adjustment amount exceeds a threshold, the phase adjustment amount being obtained by adding up the write start position-correcting phase adjustment amount and the magnification-correcting phase adjustment amount in the horizontal scanning direction in the predetermined region.

10. The image forming apparatus according to claim 1, wherein:
the phase adjustment amount-determining unit (61) is further configured to determine whether a phase adjustment amount in a predetermined region in the horizontal scanning direction calculated by the phase modulator (58b) exceeds a threshold; and
the image forming apparatus further comprises:
a threshold-changing unit (50") configured to change the threshold based on a type of the image, wherein the magnification correction of the image by the phase modulator (58b) is switched over to the magnification correction of the image by the frequency modulator (58a) based on a determination result of the phase adjustment amount-determining unit (61).

11. The image forming apparatus according to claim 10, wherein the predetermined region is in an image area in the horizontal scanning direction.

12. The image forming apparatus according to claim 10, wherein
the phase modulator (58b) is configured to correct a write start position in the horizontal scanning direction by a write start position-correcting phase adjustment amount, and to correct a magnification in the horizontal scanning direction by a magnification-correcting phase adjustment amount in the horizontal scanning direction, and
the phase adjustment amount-determining unit (61) is configured to determine whether the magnification-correcting phase adjustment amount in the horizontal scanning direction in the predetermined region exceeds a threshold.

## Patentansprüche

1. Bilderzeugungsvorrichtung, die umfasst:
eine Ablenkeinrichtung (32), die konfiguriert ist, um Lichtstrahlenbündel, die gemäß einem Bildsignal moduliert sind, abzulenken, um **dadurch** eine Oberfläche eines Bildträgers (11) in einer horizontalen Abtastrichtung abzutasten, um ein Bild auf dem Bildträger (11) zu erzeugen;
Lichtstrahlenbündel-Detektoren (25, 26), die auf beiden Seiten des Bildträgers (11) längs der horizontalen Abtastrichtung angeordnet sind, wobei die Lichtstrahlenbündel-Detektoren (25, 26) konfiguriert sind, um ein durch die Ablenkeinrichtung (32) abgelenktes Lichtstrahlenbündel zu detektieren;
eine Zeitdifferenz-Messeinheit (57), die konfiguriert ist, um eine Zeitdifferenz zwischen Detektionen der Lichtstrahlenbündel durch die Lichtstrahlenbündel-Detektoren (25, 26) zu messen; und
eine Vergrößerungskorrektureinheit (61), die konfiguriert ist, um anhand der Zeitdifferenz eine Vergrößerung in der horizontalen Abtastrichtung des Bildes auf dem Bildträger (11) zu korrigieren, wobei die Vergrößerungskorrektureinheit (61) umfasst:
einen Frequenzmodulator (58a), der konfiguriert ist, um eine Vergrößerungskorrektur des Bildes durch Ändern einer Frequenz des Bildsignals in Einheiten einer Zeile oder von Zeilen auszuführen;
einen Phasenmodulator (58b), der konfiguriert ist, um eine Vergrößerungskorrektur des Bildes durch Fixieren der Frequenz und Ändern einer Zykluszeit eines optionalen Pixels in Einheiten von Pixeln auszuführen; und
eine Phaseneinstellbetrag-Bestimmungseinheit (61), die konfiguriert ist, um festzustellen, ob ein Phaseneinstellbetrag, der durch den Phasenmodulator (58b) berechnet wird, einen Schwellenwert übersteigt, wobei
der Phasenmodulator (58b) konfiguriert ist, um die Vergrößerungskorrektur des Bildes auszuführen, bis die Phaseneinstellbetrag-Bestimmungseinheit (61) bestimmt, dass der Phaseneinstellbetrag den Schwellenwert übersteigt, und der Frequenzmodulator (58a) konfiguriert ist, um die Vergrößerungskorrektur auszuführen, nachdem bestimmt worden ist, dass der Phaseneinstellbetrag den Schwellenwert übersteigt.

2. Bilderzeugungsvorrichtung nach Anspruch 1, wobei
der Phasenmodulator (58b) konfiguriert ist, um eine Schreibstartposition in der horizontalen Abtastrichtung um einen Schreibstartpositionskorrektur-Phaseneinstellbetrag zu korrigieren und um eine Vergrößerung in der horizontalen Abtastrichtung durch einen Vergrößerungskorrektur-Phaseneinstellbetrag in der horizontalen Abtastrichtung zu korrigieren,
und die Phaseneinstellbetrag-Bestimmungseinheit (61) konfiguriert ist, um zu bestimmen, ob der Vergrößerungskorrektur-Phaseneinstellbetrag in der horizontalen Abtastrichtung einen Schwellenwert übersteigt.

3. Bilderzeugungsvorrichtung nach Anspruch 1, wobei
der Phasenmodulator (58b) konfiguriert ist, um eine Schreibstartposition in der horizontalen Abtastrichtung um einen Schreibstartpositionskorrektur-Phaseneinstellbetrag zu korrigieren und um eine Vergrößerung in der horizontalen Abtastrichtung um einen Vergrößerungskorrektur-Phaseneinstellbetrag in der horizontalen Abtastrichtung zu korrigieren, und
die Phaseneinstellbetrag-Bestimmungseinheit (61) konfiguriert ist, um zu bestimmen, ob ein Phaseneinstellbetrag einen Schwellenwert übersteigt, wobei der Phaseneinstellbetrag durch Addieren des Schreibstartpositionskorrektur-Phaseneinstellbetrags und des Vergrößerungskorrektur-Phaseneinstellbetrags in der horizontalen Abtastrichtung erhalten wird.

4. Bilderzeugungsvorrichtung nach Anspruch 1, die ferner umfasst:
eine Einheit (50', 50") zum Ändern eines spezifizierten Bereichs, die den Schwellenwert anhand eines Typs des Bildes ändert.

5. Bilderzeugungsvorrichtung nach Anspruch 1, wobei:
die Phaseneinstellbetrag-Bestimmungseinheit (61) ferner konfiguriert ist, um zu bestimmen, ob ein Phaseneinstellbetrag in einem bestimmten Bereich in der horizontalen Abtastrichtung, der durch den Phasenmodulator (58b) berechnet wird, einen Schwellenwert übersteigt;
die Bilderzeugungsvorrichtung ferner umfasst:
eine Einheit (50', 50") zum Ändern eines vorgegebenen Bereichs, die konfiguriert ist, um den vorgegebenen Bereich entsprechend einer Bildfläche in der horizontalen Abtastrichtung zu ändern, wobei anhand eines Bestimmungsergebnisses der Phaseneinstellbetrag-Bestimmungseinheit (61) die Vergrößerungskorrektur des Bildes durch den Phasemodulator (58b) zu der Vergrößerungskorrektur des Bildes durch den Frequenzmodulator (58a) umgeschaltet wird.

6. Bilderzeugungsvorrichtung nach Anspruch 5, die ferner eine Schwellenwertänderungseinheit (50") umfasst, die konfiguriert ist, um den Schwellenwert zu ändern.

7. Bilderzeugungsvorrichtung nach Anspruch 6, wobei die Schwellenwertänderungseinheit (50") konfiguriert ist, um den Schwellenwert in Abhängigkeit von einer Größe eines Übertragungspapiers zu ändern.

8. Bilderzeugungsvorrichtung nach Anspruch 5, wobei
der Phasenmodulator (58b) konfiguriert ist, um eine Schreibstartposition in der horizontalen Abtastrichtung um einen Schreibstartpositionskorrektur-Phaseneinstellbetrag zu korrigieren und um eine Vergrößerung in der horizontalen Abtastrichtung um einen Vergrößerungskorrektur-Phaseneinstellbetrag in der horizontalen Abtastrichtung zu korrigieren, und
die Phaseneinstellbetrag-Bestimmungseinheit (61) konfiguriert ist, um zu bestimmen, ob der Vergrößerungskorrektur-Phaseneinstellbetrag in der horizontalen Abtastrichtung in dem vorgegebenen Bereich einen Schwellenwert übersteigt.

9. Bilderzeugungsvorrichtung nach Anspruch 5, wobei
der Phasenmodulator (58b) konfiguriert ist, um eine Schreibstartposition in der horizontalen Abtastrichtung um einen Schreibstartpositionskorrektur-Phaseneinstellbetrag zu korrigieren und um eine Vergrößerung in der horizontalen Abtastrichtung um einen Vergrößerungskorrektur-Phaseneinstellbetrag in der horizontalen Abtastrichtung zu korrigieren, und
die Phaseneinstellbetrag-Bestimmungseinheit (61) konfiguriert ist, um zu bestimmen, ob ein Phaseneinstellbetrag einen Schwellenwert übersteigt, wobei der Phaseneinstellbetrag durch Addieren des Schreibstartpositionskorrektur-Phaseneinstellbetrags und des Vergrößerungskorrektur-Phaseneinstellbetrags in der horizontalen Abtastrichtung in dem vorgegebenen Bereich erhalten wird.

10. Bilderzeugungsvorrichtung nach Anspruch 1, wobei:
die Phaseneinstellbetrag-Bestimmungseinheit (61) ferner konfiguriert ist, um zu bestimmen, ob ein Phaseneinstellbetrag in einem vorgegebenen Bereich in der horizontalen Abtastrichtung, der durch den Phasenmodulator (58b) berechnet wird, einen Schwellenwert übersteigt; und
wobei die Bilderzeugungsvorrichtung ferner umfasst:
eine Schwellenwertänderungseinheit (50"), die konfiguriert ist, um den Schwellenwert anhand eines Typs des Bildes zu ändern, wobei anhand eines Bestimmungsergebnisses der Phaseneinstellbetrag-Bestimmungseinheit (61) die Vergrößerungskorrektur des Bildes durch den Phasenmodulator (58b) zu der Vergrößerungskorrektur des Bildes durch den Frequenzmodulator (58a) umgeschaltet wird.

11. Bilderzeugungsvorrichtung nach Anspruch 10, wobei der vorgegebene Bereich eine Bildfläche in der horizontalen Abtastrichtung ist.

12. Bilderzeugungsvorrichtung nach Anspruch 10, wobei
der Phasenmodulator (58b) konfiguriert ist, um eine Schreibstartposition in der horizontalen Abtastrichtung um einen Schreibstartpositionskorrektur-Phaseneinstellbetrag zu korrigieren und um eine Vergrößerung in der horizontalen Abtastrichtung um einen Vergrößerungskorrektur-Phaseneinstellbetrag in der horizontalen Abtastrichtung zu korrigieren, und
die Phaseneinstellbetrag-Bestimmungseinheit (61) konfiguriert ist, um zu bestimmen, ob der Vergrößerungskorrektur-Phaseneinstellbetrag in der horizontalen Abtastrichtung in dem vorgegebenen Bereich einen Schwellenwert übersteigt.

## Revendications

1. Appareil de formation d'image comprenant :
un déflecteur (32) constitué pour dévier des faisceaux optiques modulés en fonction d'un signal d'image pour balayer ainsi la surface d'un porteur (11) d'image dans une direction de balayage horizontal pour former une image sur le porteur (11) d'image ;
des détecteurs (25, 26) de faisceau optique agencés des deux côtés du porteur (11) d'image suivant la direction de balayage horizontal, dans lequel les détecteurs (25, 26) de faisceau optique sont constitués pour détecter un faisceau optique dévié par le déflecteur (32) ;
une unité (57) de mesure de différence temporelle constituée pour mesurer une différence temporelle entre des détections des faisceaux optiques par des détecteurs (25, 26) de faisceau optique ; et
une unité (61) de correction d'agrandissement constituée pour corriger, en se basant sur la différence temporelle, l'agrandissement dans la direction de balayage horizontal de l'image sur le porteur (11) d'image, dans lequel l'unité (61) de correction d'agrandissement inclut :
un modulateur (58a) de fréquence constitué pour effectuer une correction d'agrandissement de l'image en changeant la fréquence du signal d'image ligne par ligne ou plusieurs lignes à la fois ;
un modulateur (58b) de phase constitué pour effectuer une correction d'agrandissement de l'image en fixant la fréquence et en changeant la durée de cycle d'un pixel optionnel pixel par pixel ; et
une unité (61) de détermination de valeur d'ajustement de phase pour déterminer si une valeur d'ajustement de phase calculée par le modulateur (58b) de phase dépasse un seuil,
dans lequel le modulateur (58b) de phase est constitué pour effectuer la correction d'agrandissement de l'image jusqu'à ce que l'unité (61) de détermination de valeur d'ajustement de phase détermine que la valeur d'ajustement de phase dépasse le seuil, et dans lequel le modulateur (58a) de fréquence est constitué pour effectuer la correction d'agrandissement après qu'il a été déterminé que la valeur d'ajustement de phase dépasse le seuil.

2. Appareil de formation d'image selon la revendication 1,
dans lequel le modulateur (58b) de phase est constitué pour corriger, d'une valeur d'ajustement de phase de correction de position de début d'écriture, la position de début d'écriture dans la direction de balayage horizontal, et pour corriger, de la valeur d'ajustement de phase de correction d'agrandissement dans la direction de balayage horizontal, l'agrandissement dans la direction de balayage horizontal, et
dans lequel l'unité (61) de détermination de valeur d'ajustement de phase est constituée pour déterminer si la valeur d'ajustement de phase de correction d'agrandissement dans la direction de balayage horizontal dépasse un seuil.

3. Appareil de formation d'image selon la revendication 1,
dans lequel le modulateur (58b) de phase est constitué pour corriger, d'une valeur d'ajustement de phase de correction de position d'écriture, la position de début d'écriture dans la direction de balayage horizontal, et pour corriger, d'une valeur d'ajustement de phase de correction d'agrandissement dans la direction de balayage horizontal, l'agrandissement dans la direction de balayage horizontal, et
dans lequel l'unité (61) de détermination de valeur d'ajustement de phase est constituée pour déterminer si une valeur d'ajustement de phase dépasse un seuil, la valeur d'ajustement de phase étant obtenue en additionnant la valeur d'ajustement de phase de correction de position de début d'écriture et la valeur d'ajustement de phase de correction d'agrandissement dans la direction de balayage horizontal.

4. Appareil de formation d'image selon la revendication 1, comprenant en outre une unité (50', 50") de changement de région spécifiée qui change le seuil en se basant sur un type de l'image.

5. Appareil de formation d'image selon la revendication 1,
dans lequel l'unité (61) de détermination de valeur d'ajustement de phase est en outre constituée pour déterminer si une valeur d'ajustement de phase dans une région prédéterminée dans la direction de balayage horizontal, calculée par le modulateur (58b) de phase, dépasse un seuil ;
dans lequel l'appareil de formation d'image comprend en outre une unité (50', 50") de changement de région prédéterminée constituée pour changer la région prédéterminée correspondant à une zone d'image dans la direction de balayage horizontal, dans lequel la correction d'agrandissement de l'image par le modulateur (58b) de phase est remplacée par la correction d'agrandissement de l'image par le modulateur (58a) de fréquence en se basant sur un résultat de détermination de l'unité (61) de détermination de valeur d'ajustement de phase.

6. Appareil de formation d'image selon la revendication 5, comprenant en outre une unité (50") de changement de seuil constituée pour changer le seuil.

7. Appareil de formation d'image selon la revendication 6, dans lequel l'unité (50") de changement de seuil est constituée pour changer le seuil en fonction du format d'un papier de transfert.

8. Appareil de formation d'image selon la revendication 5,
dans lequel le modulateur (58b) de phase est constitué pour corriger, d'une valeur d'ajustement de phase de correction de position de début d'écriture, la position de début d'écriture dans la direction de balayage horizontal, et pour corriger, d'une valeur d'ajustement de phase de correction d'agrandissement dans la direction de balayage horizontal, l'agrandissement dans la direction de balayage horizontal, et
dans lequel l'unité (61) de détermination de valeur d'ajustement de phase est constituée pour déterminer si la valeur d'ajustement de phase de correction d'agrandissement dans la direction de balayage horizontal dans la région prédéterminée dépasse un seuil.

9. Appareil de formation d'image selon la revendication 5,
dans lequel le modulateur (58b) de phase est constitué pour corriger, d'une valeur d'ajustement de phase de correction de position de début d'écriture, la position de début d'écriture dans la direction de balayage horizontal, et pour corriger, d'une valeur d'ajustement de phase de correction d'agrandissement dans la direction de balayage horizontal, l'agrandissement dans la direction de balayage horizontal, et
dans lequel l'unité (61) de détermination de valeur d'ajustement de phase est constituée pour déterminer si la valeur ajustement de phase dépasse un seuil, la valeur d'ajustement de phase étant obtenue en additionnant la valeur d'ajustement de phase de correction de position de début d'écriture et la valeur d'ajustement de phase de correction d'agrandissement dans la direction de balayage horizontal dans la région prédéterminée.

10. Appareil de formation d'image selon la revendication 1,
dans lequel l'unité (61) de détermination de valeur d'ajustement de phase est en outre constituée pour déterminer si la valeur d'ajustement de phase dans une région prédéterminée dans la direction de balayage horizontal, calculée par le modulateur (58b) de phase, dépasse un seuil ; et
dans lequel l'appareil de formation d'image comprend en outre une unité (50") de changement de seuil constituée pour changer le seuil en se basant sur le type de l'image, dans lequel la correction d'agrandissement de l'image par le modulateur (58b) de phase est remplacée par la correction d'agrandissement de l'image par le modulateur (58a) de fréquence en se basant sur un résultat de détermination de l'unité (61) de détermination de valeur d'ajustement de phase.

11. Appareil de formation d'image selon la revendication 10, dans lequel la région prédéterminée est une zone d'image dans la direction de balayage horizontal.

12. Appareil de formation d'image selon la revendication 10,
dans lequel le modulateur (58b) de phase est constitué pour corriger, d'une valeur d'ajustement de phase de correction de position de début d'écriture, la position de début d'écriture dans la direction de balayage horizontal, et pour corriger, d'une valeur d'ajustement de phase de correction d'agrandissement dans la direction de balayage horizontal, l'agrandissement dans la direction de balayage horizontal, et
dans lequel l'unité (61) de détermination de valeur d'ajustement de phase est constituée pour déterminer si la valeur d'ajustement de phase de correction d'agrandissement dans la direction de balayage horizontal dans la région prédéterminée dépasse un seuil.
